(19) Europäisches Patentamt
European Patent Office
Office européen des brevets

(11) EP 1 726 076 B1

(12) EUROPÄISCHE PATENTSCHRIFT

(45) Veröffentlichungstag und Bekanntmachung des Hinweises auf die Patenterteilung:
**05.10.2011 Patentblatt 2011/40**

(21) Anmeldenummer: **05731095.5**

(22) Anmeldetag: **02.03.2005**

(51) Int Cl.:
***H02H 7/085*** (2006.01) ***H02H 1/00*** (2006.01)

(86) Internationale Anmeldenummer:
**PCT/DE2005/000360**

(87) Internationale Veröffentlichungsnummer:
**WO 2005/086312 (15.09.2005 Gazette 2005/37)**

(54) **VERFAHREN ZUM ÜBERWACHEN DER VERSTELLBEWEGUNG EINES VON EINER ANTRIEBSEINRICHTUNG ANGETRIEBENEN BAUTEILS**

METHOD FOR MONITORING THE DISPLACEMENT OF A COMPONENT DRIVEN BY A DRIVING DEVICE

PROCEDE POUR SURVEILLER LE MOUVEMENT DE DEPLACEMENT D'UN COMPOSANT ENTRAINE PAR UN DISPOSITIF D'ENTRAINEMENT

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **02.03.2004 DE 102004011015**

(43) Veröffentlichungstag der Anmeldung:
**29.11.2006 Patentblatt 2006/48**

(73) Patentinhaber: **Brose Fahrzeugteile GmbH & Co. KG, Coburg**
**96450 Coburg (DE)**

(72) Erfinder:
- **SCHLESIGER, Markus**
  **96103 Hallstadt (DE)**
- **BAUMANN, Sven**
  **98553 Breitenbach (DE)**

(74) Vertreter: **Ninnemann, Detlef et al**
**Patentanwälte**
**Maikowski & Ninnemann**
**Postfach 15 09 20**
**10671 Berlin (DE)**

(56) Entgegenhaltungen:
**WO-A-02/27132 WO-A-03/063318**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 726 076 B1

## Beschreibung

Die Erfindung betrifft ein Verfahren zum Überwachen der Verstellbewegung eines von einer Antriebseinrichtung angetriebenen translatorisch oder rotatorisch verstellbaren Bauteils, insbesondere ein Verfahren zum Ermitteln der Kraft, mit der eine Antriebseinrichtung ein Bauteil verstellt oder ein im Verstellweg des Bauteils befindliches Objekt einklemmt.

Aus der DE 198 40 164 A1 ist ein Verfahren zum Verstellen eines zwischen zwei Stellungen translatorisch bewegbaren Bauteils bekannt, bei dem die momentane Krafteinwirkung auf das translatorisch bewegbare Bauteil aus der Periodendauer eines Antriebsmotors, der Teil einer das translatorisch vestellbare Bauteil verstellenden Antriebseinrichtung ist, aus Kraftänderungswerten, die aus Änderungen der Drehzahl des Antriebsmotors berechnet werden, und aus den aufsummierten und über Gleichungssysteme, die anhand eines mathematischen Modells der gesamten Verstellvorrichtung einschließlich des Antriebs erstellt wurden, gewichtete Kraftänderungswerte ermittelt werden, die ausschließlich vom Verhalten des Antriebsmotors abhängen. Die momentane Krafteinwirkung auf das translatorisch bewegbare Bauteil wird als Kriterium für das Abschalten oder Reversieren des Antriebsmotors herangezogen, wobei bei der Berechnung der Kraftänderungswerte für jeden Drehzahländerungswert, der einen oberen Schwellwert übersteigt, der Wert dieses oberen Schwellwertes anstelle des Drehzahländerungswertes herangezogen wird.

Zur Begrenzung der Anzahl der zu erfassenden physikalischen Größen und der Häufigkeit der Abtastungen der physikalischen Größen wird die Periodendauer der Umdrehungen des Antriebsmotors mittels eines Magnetrades und zweier Hall-Sensoren erfasst. Aus der erfassten Periodendauer in Verbindung mit verschiedenen, empirisch oder messtechnisch erfassten Parametern wird eine fein gerasterte Überwachung der Einklemmschutzkriterien durch Extrapolation der erfassten Periodendauer angestrebt.

Dazu werden zur Bestimmung der momentanen Krafteinwirkung auf das translatorisch bewegbare Bauteil die nur periodenweise zur Verfügung stehenden Messwerte der Periodendauer extrapoliert, wobei die bei der Extrapolationsformel verwendeten Parameter das Gesamtsystem der Antriebsvorrichtung modulieren und durch die Federsteifigkeiten, Dämpfungen und Reibungen des Gesamtsystems bestimmt sind. Dadurch werden spektrale Anteile des Periodenzeitverlaufs, die von Vibrationen herrühren, schwächer bewertet als solche, die von einem Einklemmfall herrühren. Aus den so bestimmten Schätzwerten für die Periodendauer wird dann die Drehzahländerung zu einem Zeitpunkt, bezogen auf den vorhergehenden Zeitpunkt unter Verwendung eines Motorspannungsfilters und eines Wegprofilfilters abgeschätzt, um Einflüsse der Motorspannung und der Position des beweglichen Fahrzeugteils auf die Motordrehzahl zu eliminieren.

Die für die Elimination der Motorspannung und Position des translatorisch bewegbaren Bauteils auf die Motordrehzahl verwendeten Größen bilden unter anderem das dynamische Verhalten des Antriebsmotors bei Spannungsänderungen nach. Eine weitere Korrektur wird dadurch vorgenommen, dass die abgeschätzten Drehzahländerungen mit einer festgesetzten, zeitlich konstanten Untergrenze verglichen werden. Soweit die abgeschätzten Drehzahländerungen diese Untergrenze übersteigen, werden sie mit einem Proportionalitätsfaktor multipliziert, der die Steilheit der Motorkennlinie des Antriebsmotors wiedergibt.

Aus der DE 40 20 351 C2 ist ein Verfahren zur Steuerung einer Fensterscheibe eines Kraftfahrzeugs bekannt, bei dem ein Korrekturverfahren angewendet wird, um ein Einklemmschutzkriterium abzuleiten, mit dem ein zu frühes Ansprechen einer Einklemmschutzvorrichtung verhindert werden soll. Zu diesem Zweck versorgt eine erste Sensoreinrichtung eine Steuerelektronik mit ursächlich mit der Fensterscheibe und der die Fensterscheibe bewegenden Antriebseinrichtung zusammenhängenden Signalen wie Bordspannung, Fensterhebergeschwindigkeit, Drehmoment des Antriebs, Scheibengewicht usw., während ein zweites Sensorelement die Steuerelektronik mit ursächlich nicht mit der Fensterscheibe und der Antriebseinrichtung zusammenhängenden Signalen versorgt, nämlich mit auf die Karosserie einwirkenden Beschleunigungskräften. Um ein fälschliches Abschalten oder Reversieren der Einklemmschutzvorrichtung zu verhindern, werden die Signale des zweiten Sensorelementes als Grundpegel verwendet und die Signale der ersten Sensoreinrichtung unter Sicherheitsaspekten bewertet.

Bei dem bekannten Verfahren wird von einer relativen Erkennung eines Kraftaufbaus durch einen Anstieg der Periodendauer Gebrauch gemacht, das heißt, die Kraftänderungen in aufeinanderfolgenden Zeitabschnitten werden miteinander verglichen, wodurch der Anlauf des translatorisch bewegbaren Bauteils nur schwer vom Einklemmen eines Objekts im Verstellweg des translatorisch bewegbaren Bauteils unterschieden werden kann.

Bei Spannungssprüngen im Bordnetz eines Kraftfahrzeugs und beim Befahren von Schlechtwegstrecken erfolgt durch die bekannten Verfahren eine Überkompensation der Störgrößen, was zu hohen Offsets mit sehr hohen Kräften führt, so dass die zulässigen Einklemmkräfte überschritten werden. Ein weiterer Nachteil der bekannten Verfahren besteht darin, dass eine Erkennung der auf das translatorisch bewegbare Bauteil einwirkenden Kraft nur bei einem Anstieg in der Periodendauer möglich ist, was zu hohen Kräften bei einer Degression der Periodendauer führt, das heißt bei einer Abnahme der Periodendauer, beispielsweise infolge einer Leichtgängigkeit des translatorisch bewegbaren Bauteils, was ebenfalls zu erhöhten Einklemmkräften führt.

Alters- und verschleißbedingte Veränderungen im Verlauf des Verstellwegs des translatorisch bewegbaren Bauteils werden bei dem bekannten Verfahren durch Parameteränderungen kompensiert, was eine Nachführung des Regelalgorithmus und ein entsprechend aufwändiges Regelungsverfahren bedingt.

Schließlich sind die bekannten Verfahren an die Auswahl einer bestimmten Anzahl unterschiedlicher Parameter gebunden, die für das Abschalten bzw. Reversieren des translatorisch bewegbaren Bauteils maßgeblich sind, was bei einer größeren Parameterzahl einen entsprechenden Aufwand an Sensorik und Regelungstechnik mit sich bringt.

Aus der DE 101 96 629 T1, welche mit WO02/27132 A1 übereihstimmt, ist die Anwendung eines neuronalen Netzes in einem Sensorsystem für ein angetriebenes Schließsystem und ein Verfahren zum bedarfsweisen Verhindern des Schließens eines angetriebenen Schließsystems bekannt, bei dem das Sensorsystem Gegenstände vor dem Einklemmen durch einen Näherungssensor erkennt. Die bei den vorstehend angegebenen bekannten Verfahren auftretenden Probleme beziehen sich jedoch auf eine Erfassung von Signalen der Antriebseinrichtung, was eine Auswertung und Fehlerkorrektur wegen der wechselseitigen Einflussgrößen besonders schwierig macht.

Aufgabe der vorliegenden Erfindung ist es, ein Verfahren zum Überwachen der Verstellbewegung eines von einer Antriebseinrichtung angetriebenen translatorisch oder rotatorisch verstellbaren Bauteils anzugeben, das die unterschiedlichen Einflussgrößen auf die Verstell-, Einklemm- oder Reversierkraft berücksichtigt, an Veränderungen der Einflussgrößen automatisch anpassbar ist und eine hohe Flexibilität bei der Berücksichtigung der Einflussgrößen auf einen Einklemmschutz aufweist.

Diese Aufgabe wird erfindungsgemäß durch die Merkmale des Anspruchs 1 gelöst.

Die erfindungsgemäße Lösung stellt ein Verfahren zum Überwachen der Verstellbewegung eines von einer Antriebseinrichtung angetriebenen translatorisch oder rotatorisch verstellbaren Bauteils, insbesondere durch Ermittlung einer Verstell-, Einklemm- oder Reversierkraft, mit einstellbarer Empfindlichkeit zur Verfügung, das die unterschiedlichsten Einflussgrößen auf die Verstell-, Einklemm- od er Reversierkraft berücksichtigt, an Veränderungen der Einflussgrößen automatisch anpassbar ist und eine hohe Flexibilität bei der Berücksichtigung der Einflussgrößen auf einen Einklemmschutz aufweist.

Im einzelnen stellt die erfindungsgemäße Lösung sicher, dass

- die Empfindlichkeit der Kraftermittlung bei niedrigen Federraten einstellbar ist;
- Änderungen der Versorgungsspannung nicht zu hohen Kraftschwankungen und insbesondere Spannungssprünge nicht zu einem Reversieren der Verstellbewegung oder zu einer Überkompensation führen;
- ein großer Spannungsbereich von beispielsweise 8-17 V gewährleistet ist;
- eine Überlagerung eines Kraftaufbaus bei einer Beschleunigung rechtzeitig erkannt wird;
- fortlaufend Veränderungen im Verstellweg des verstellbaren Bauteils erfasst werden;
- die Abschaltkraft des Einklemmschutzes kontinuierlich einstellbar ist;
- die Art der Signalerfassung beliebig ist und
- eine einfache Anpassung an kundenspezifische Forderungen möglich ist.

Die erfindungsgemäße Lösung nutzt die Vorteile eines neuronalen Netzes bei der Ermittlung einer Verstell-, Einklemm- oder Reversierkraft, nämlich

- die Fähigkeit, aus gegebenen Daten selbständig zu lernen, ohne dafür explizit programmiert werden zu müssen,

- das Erkennen von gespeicherten Mustern auch dann, wenn das Eingabemuster in der Lernphase unvollständig oder ein Teil davon fehlerhaft ist sowie

- von gelernten auf nicht gelernte Probleme zu schließen.

Vorzugsweise wird eine Verzögerung der Verstellbewegung der Antriebseinrichtung durch eine Veränderung der Periodendauer und/oder des Motorstroms und/oder der Motorspannung eines Antriebsmotors der Antriebseinrichtung ermittelt.

Das erfindungsgemäße Verfahren macht von einer direkten oder indirekten Erkennung eines Einklemmfalles durch ein Ansteigen der Periodendauer oder des Motorstromes unter Berücksichtigung der Motorspannung des Antriebsmotors der Antriebseinrichtung bzw. durch eine Verknüpfung eines Teils oder sämtlicher Signale Gebrauch. Während im Einklemmfall, der vorzugsweise bei verschiedenen Federraten von beispielsweise 2N/mm, 10N/mm, 20N/mm und 65N/mm mit einem 4mm Stab ermittelt wird, das verstellbare Bauteil angehalten oder reversiert wird, führt ein Spannungssprung, ein Einlaufen des verstellbaren Bauteils in eine Dichtung oder eine sonstige, auch witterungsbedingte Schwergängigkeit im Verstellweg des verstellbaren Bauteils sowie der Anlauf der Antriebseinrichtung zu einer Fortsetzung der Verstellbewegung.

Während bei vielen der bekannten Verfahren zusätzliche Sensoren wie beispielsweise Näherungssensoren, Beschleunigungssensoren und dergleichen eingesetzt werden, erfolgt bei der erfindungsgemäßen Lösung eine Auswertung der Periodendauer und oder des Motorstroms und/oder der Motorspannung und somit ohne den zusätzlichen Herstellungsaufwand durch die Installation entsprechender Sensoren in Verbindung mit einer Einrichtung zur Auswertung der Sensorsignale mit einem geeigneten Algorithmus, der auf viele Einklemmfälle nicht oder nur ungenügend reagiert.

Die aus der Antriebseinrichtung ableitbaren Eingangssignale können wahlweise parallel, d.h. gleichzeitig, oder seriell, beispielsweise im Multiplexverfahren, an die Eingangsneuronen der Eingangsschicht des neuronalen Netzes abgegeben werden.

Damit das neuronale Netz in der Lage ist, zu lernen, werden die Eingänge der Eingangsschicht, der verborgenen Schicht und der Ausgangsschicht sowie die Verbindungen der Eingangsschicht mit der mindestens einen verborgenen Schicht, die Verbindungen der mehreren verborgenen Schichten untereinander und die Verbindung einer verborgenen Schicht mit der Ausgangsschicht verschieden stark gewichtet, wodurch die Verbindungen zwischen den einzelnen Schichten unterschiedliche Stärke haben.

Weiterhin besitzen die verborgenen Neuronen der mindestens einen verborgenen Schicht und das mindestens eine Neuron der Ausgangsschicht einen konstanten Schwellwert oder Bias, der den Ausgang der Transferfunktionen der Neuronen in einen stetigen Bereich verschiebt. Dabei sind der Bias und die Gewichte Konstanten, die in der Anwendung bzw. einem Serieneinsatz nicht mehr verändert, beziehungsweise nachgelernt werden. Sie werden einmal vor dem Serieneinsatz ermittelt und beispielsweise in einem EEProm abgelegt. Der Algorithmus kann dann, falls sich Schwachpunkte im Algorithmus aufzeigen, durch eine neue Parametereinstellung, d.h. durch Nachlernen verbessert werden. In der Anwendung jedoch bleiben sowohl die Gewichte als auch der Bias bestehen.

In einer Lernphase werden an die Eingangsneuronen, verborgenen Neuronen und/oder Ausgangsneuronen des neuronalen Netzes zufällige Gewichte vergeben, verschiedene an die Eingangsneuronen angelegte Eingangsmuster vorgegeben und der dazugehörige mindestens eine Ausgangswert berechnet wird und in Abhängigkeit vom Unterschied zwischen dem mindestens einen Ausgangswert und mindestens einem Soll-Ausgangswert die Gewichte und/oder der Schwellenwert verändert. Dabei hängt das Maß der Änderung der Gewichte von der Größe des Unterschieds zwischen dem mindestens einen Ausgangswert und dem mindestens einen Soll-Ausgangswert ab.

Die Messung des Ausgangswertes erfolgt vorzugsweise mit einer Kraftmesszange bei unterschiedlichen Federraten, insbesondere bei 2 N/mm und 20 N/mm, wobei die Kraftmesszange analog zu den Eingangswerten den gemessenen Ausgangswert ausgibt.

Entsprechend der direkten oder indirekten Signalerfassung, mit der das Abbremsen der Antriebseinrichtung durch einen Anstieg der Periodendauer und/oder der Stromaufnahme eines Antriebsmotors der Antriebseinrichtung ermittelt wird, werden den Eingangsneuronen als Eingangssignale die Motorperiode und oder der Motorstrom und/oder die Motorspannung des Antriebsmotors eingegeben.

Als zusätzliches Eingangssignal wird den Eingangsneuronen eine Adaptionsperiode eingegeben, die die bei einer vorgegebenen Referenzspannung berechnete Periode angibt, die zur Position einer in der Lernphase abgelegten Referenzwegstrecke gehört.

In der Lernphase kann die Adaptionsperiode in einem kleineren als dem in der Anwendung verwendeten neuronalen Netz berechnet werden, wobei die Adaptionsperiode gemittelt wird, indem bei jeder vollen Umdrehung oder in 4 Viertelperioden des Antriebsmotors das neuronale Netz eine neue Adaptionsperiode errechnet, die bei der nächsten Verstellbewegung als Adaptionsperiode zur Verfügung gestellt wird.

In einer bevorzugten Ausführung der Erfindung bestehen die Eingangswerte der Eingangsneuronen aus den Werten eines Adaptionsanlaufs des verstellbaren Bauteils, den Werten einer Adaptionsperiode beim Verstellen des verstellbaren Bauteils, einem Anlaufflag, den Ausgangswerten eines Schieberegisters für Spannungswerte des Antriebsmotors, den Ausgangswerten eines Schieberegisters für Periodenwerte, der Antriebsmotortemperatur, der Außentemperatur, einem Geschwindigkeitssignal, einem Schwingflag und einem vorangegangenen Ausgangswert, während als Ausgangswert eines Ausgangsneurons die neuronal ermittelte Kraft abgegeben wird.

In der Lernphase des neuronalen Netzes werden an die Eingangsneuronen Eingangsmuster angelegt und die von dem mindestens einen Ausgangsneuron abgegebenen Kraftwerte in Abhängigkeit von der gewünschten Empfindlichkeit des Systems bei niedrigen Federraten ausgewählt bzw. vorgegeben. Dabei besteht der Lernanteil in der Lernphase des neuronalen Netzes insbesondere aus der Adaptionsperiode, die nach jedem Lauf neu in der Anwendung ermittelt wird.

Die Lernphase erfolgt nach einem weiteren Merkmal der Erfindung vor der betriebsgemäßen Anwendung in einem Fahrzeug, während bei der betriebsgemäßen Anwendung die in der Lernphase ermittelten Gewichte des neuronalen Netzes festgelegt werden.

Die Verarbeitung von Absolutwerten erfordert zum einen Korrekturkurven, um die Verhaltensweise bzw. absolute Ausgangswerte beispielsweise eines Antriebssystems bei unterschiedlichen Parametern zu ermitteln, was zu erheblichen Ungenauigkeiten führt, und zum anderen eine große Anzahl von Eingangsneuronen, um die verschiedenen Einflussfaktoren hinreichend zu berücksichtigen, was wiederum zu einer erheblichen Rechenleistung des für die Nachbildung eines neuronalen Netzes eingesetzten Mikroprozessors bedeutet. Zur Vermeidung beider Nachteile wird in einer Weiterbildung der Erfindung eine Adaptionseinrichtung zur Ermittlung von auf einen Referenzwert normierten Signalen der Antriebseinrichtung und Abgabe von Adaptionswerten an die Eingangsschicht des neuronalen Netzes eingesetzt.

Vorzugsweise gibt die Adaptionseinrichtung die Adaptionswerte in Abhängigkeit von der jeweiligen Position des translatorisch oder rotatorisch verstellbaren Bauteils an Eingangsneuronen als zusätzliches Eingangssignal ab.

Die Adaptionseinrichtung kann wahlweise aus einem Modell der Antriebseinrichtung, einem Fuzzy-System, einem mathematischen Modell mit einem genetisch generierten Algorithmus, insbesondere aber auch aus einem neuronalen Adaptionsnetz bestehen, dessen Eingangsneuronen mit mindestens einem Signal der Antriebseinrichtung beaufschlagt sind und dessen mindestens ein Ausgangsneuron die positionsabhängigen Adaptionswerte an das neuronale Netz abgibt.

Um das Verhalten der Antriebseinrichtung bei unterschiedlichen Motorspannungen des Antriebsmotors zu ermitteln, wird die jeweilige Motorspannung auf eine Referenzspannung bezogen, wobei die dem neuronalen Netz vom neuronalen Adaptionsnetz zur Verfügung gestellten Daten der Periode des zugehörigen Moments auf die Referenzspannung bezogen sind, so dass die auf die Referenzspannung geeichte Referenzkurve bei unterschiedlichen Momenten stets korrekt berechnet wird. Als Eingangsdaten des neuronalen Adaptionsnetzes werden dabei die Perioden oder die Summe über mehrere Perioden und die dazugehörige Motorspannung zugeführt und das neuronale Adaptionsnetz ermittelt dann im Lauf indirekt das jeweilige Moment und stellt die zugehörige Periode bei der Referenzspannung dem die Einklemm-, Verstell- oder Überschusskraft ermittelnden neuronalen Netz als Eingangswert zur Verfügung.

Zur weiteren Steigerung der Genauigkeit bei der Ermittlung der jeweiligen Verstellkraft der Antriebseinrichtung mittels des neuronalen Netzes können die Eingangsneuronen des neuronalen Adaptionsnetzes mit Zusatzparametern wie der Umgebungstemperatur, Klimadaten oder der Temperatur und des Abkühlverhaltens des Antriebsmotors der Antriebseinrichtung beaufschlagt werden.

Da bislang verwendete Algorithmen zum Erkennen eines Einklemmzustandes bei niedrigen Federraten sehr empfindlich sind, um bei hohen Federraten niedrige Einklemmkräfte zu erzielen, führen niedrige Kräfte bei niedrigen Federraten häufig zu einem fehlerhaften Reversieren des Antriebsmotors.

Um ein fehlerhaftes Reversieren des Antriebsmotors beispielsweise aufgrund von Änderungen der Verstellkraft des Fensterhebersystems oder Veränderungen des Antriebsmotors zu vermeiden, wird nach einem weiteren Merkmal der Erfindung der Antriebsmotor in Abhängigkeit vom Ausgangswert des neuronalen Netzes und der Federrate der Antriebseinrichtung angehalten oder reversiert. Dabei kann die Verknüpfung der Federrate der Antriebseinrichtung mit dem Ausgangswert des neuronalen Netzes mittels einer Logikschaltung, eines mathematischen Modells mit einem Algorithmus oder mittels eines neuronalen Verknüpfungsnetzes erfolgen.

Demzufolge wird die Drehzahldifferenz bei unterschiedlichen Perioden des Antriebsmotors genutzt, um hohe Federraten von niedrigen Federraten zu unterscheiden. Die Entscheidung für einen Einklemmzustand wird dementsprechend in Abhängig keit von dem der Verstellkraft entsprechenden Ausgangswert des neuronalen Netzes und der aus der Drehzahldifferenz ermittelten Federrate getroffen.

Zur Verknüpfung der Federrate der Antriebseinrichtung mit dem Ausgangswert des neuronalen Netzes wird die Drehzahl des Antriebsmotors erfasst, die Drehzahldifferenz zwischen zwei Perioden gebildet und mit dem Ausgangswert des neuronalen Netzes derart verknüpft wird, dass

- beim Überschreiten eines ersten Abschalt-Schwellwertes des Ausgangswertes des neuronalen Netzes und einer Drehzahldifferenz, die kleiner ist als ein vorgegebener Drehzahldifferenz-Schwellwert, der Antriebsmotor bis zum Ende der Verstellbewegung nur dann angehalten oder reversiert wird, wenn der Ausgangswert des neuronalen Netzes einen zweiten Abschalt-Schwellwert überschreitet, der größer ist als der erste Abschalt-Schwellwert,
- beim Überschreiten eines ersten Abschalt-Schwellwertes des Ausgangswertes des neuronalen Netzes und einer Drehzahldifferenz, die größer ist als ein vorgegebener Drehzahldifferenz-Schwellwert der Antriebsmotor angehalten oder reversiert wird, oder
- beim Überschreiten des zweiten Abschalt-Schwellwertes unabhängig von der Drehzahldifferenz der Antriebsmotor angehalten oder reversiert wird.

Vorzugsweise wird beim Überschreiten des ersten Abschalt-Schwellwertes des Ausgangswertes des neuronalen Netzes und einer Drehzahldifferenz, die kleiner ist als ein vorgegebener Drehzahldifferenz-Schwellwert, ein Anhalten oder Reversieren des Antriebsmotors gesperrt oder verriegelt, auch wenn die Drehzahldifferenz bei der weiteren Verstellbewegung der Antriebseinrichtung größer ist als der vorgegebene Drehzahldifferenz-Schwellwert.

Neuronale Netze werden im Stand der Technik in Steuerungsvorrichtungen für Verstelleinrichtungen eines Kraftfahrzeugteiles eingesetzt.

Als Kraftfahrzeugteile kommen dabei grundsätzlich sämtliche motorisch verstellbaren ausgebildeten Kraftfahrzeugteile in Betracht. Dies sind insbesondere solche Kraftfahrzeugteile, deren Verstellweg derart ausgebildet ist, dass die Möglichkeit des Einklemmens von Hindernissen zwischen dem Kraftfahrzeugteil und anderen Bauelementen des Kraftfahrzeuges besteht. Dies sind insbesondere Fensterscheiben, Schiebetüren, Gurtbringer und Kraftfahrzeugsitze.

Bekannte Steuerungsvorrichtungen sind derart eingerichtet und ausgebildet, Messgrößen in einer Elektronikeinrichtung mit dem neuronalen Netz auszuwerten und zur Steuerung der Verstelleinrichtung zu nutzen.

Derartige Messgrößen umfassen sämtliche im Zusammenhang mit dem Kraftfahrzeug und dessen Bauelementen erdenklichen Parameter. Dies sind insbesondere auf das Kraftfahrzeug einwirkende Beschleunigungen, die Kraftfahrzeuggeschwindigkeit, die Verstellgeschwindigkeit und die Verstellkraft der Verstelleinrichtung oder deren Leistungsaufnahme.

Wie bereits ausgeführt stellen die Gewichte des neuronalen Netzes wesentliche Parameter für die Funktion der Netze dar. Jede Verbindung zwischen zwei Neuronen ist durch ein solches Gewicht charakterisiert, das üblicherweise in Form eines Zahlenfaktors gegeben ist. Ein an einem Neuron auftretendes Eingangssignal wird jeweils mit den zugeordneten Gewichten der entsprechenden Verbindungen zu den benachbarten Neuronen multipliziert. Die optimale Kombination einer für eine reibungslose Funktion des neuronalen Netzes erforderlichen Vielzahl von Gewichten, lässt sich in einem so genannten Lernprozess ermitteln. Diese definierte Menge an Gewichten wird auch als Satz von Gewichten bezeichnet. Der einmal gelernte Satz an Gewichten kann in einem dem neuronalen Netz zugeordneten Speicherelement abgelegt werden.

Ein solcher Lernprozess simuliert eine Vielzahl von Zuständen eines Kraftfahrzeuges und seiner Bauelemente, die während der Nutzung des Kraftfahrzeuges auftreten können. Es ist selbstverständlich, dass ein auf diese Weise ermittelter Satz an Gewichten für das neuronale Netz nicht allen erdenklichen Zuständen des Kraftfahrzeuges und seiner Bauelemente gleich gut gerecht werden kann.

Aus diesem Grund werden häufig aufwändige elektronische Filterschaltungen eingesetzt, um das Fehlverhalten der Steuerungsvorrichtung bei einigen Zuständen des Kraftfahrzeuges und/oder der Verstelleinrichtung zu vermeiden. Diese Filterschaltungen neigen jedoch teilweise zum Überkompensieren oder reagieren unzuverlässig.

Somit stellt es eine Aufgabe dar, eine Steuerungsvorrichtung der vorangehend beschriebenen Art darzustellen, die bei der großen Zahl unterschiedlicher Zustände eines Kraftfahrzeugs und seiner Bauelemente möglichst zuverlässig funktioniert, wobei die Steuerungsvorrichtung einfach und kostengünstig herstellbar sein soll.

Zur Lösung dieser Aufgabe ist eine dem neuronalen Netz zugeordnete Speichereinheit vorgesehen, die mindestens zwei Sätze gespeicherter Gewichte für das neuronale Netz aufweist. Jeder Satz an Gewichten ist einem Zustand des Kraftfahrzeuges und/oder einem Zustand der Verstelleinrichtung zugeordnet, wobei das neuronale Netz abhängig vom Zustand des Kraftfahrzeuges und/oder abhängig vom Zustand der Verstelleinrichtung mit dem jeweils zugeordneten Satz von Gewichten arbeitet.

Dadurch, dass dem jeweiligen Zustand bzw. der jeweiligen Zustandskombination ein spezifischer Satz an Gewichten für das neuronale Netz zugeordnet ist, ist der Einsatz elektronischer Filter überflüssig. Gleichzeitig wird die Zuverlässigkeit der Steuerungsvorrichtung erhöht.

Unter das Merkmal der Zustände des Kraftfahrzeuges und seiner Bauelemente, wie beispielsweise die Steuerungsvorrichtung und die ihr zugeordnete Verstelleinrichtung, fallen insbesondere die Fahrzeuggeschwindigkeit, von der Fahrzeugfahrtrichtung abweichende Beschleunigungen, die beispielsweise für eine Schlechtwegstrecke charakteristisch sind, Schwankungen der Bordnetzspannung, der Anlauf eines der Verstelleinrichtung zugeordneten Motors, Schwergängigkeiten der Verstelleinrichtung, die durch charakteristische Änderungen der Leistungsaufnahme über der zurückgelegten Wegstrecke oder der Zeit zum Ausdruck kommen, und das Zuschlagen einer Kraftfahrzeugtür.

Insbesondere schwankende Bordnetzspannungspegel führen zu zeitlichen Veränderung der Versorgungsspannung der Verstelleinrichtung. Dadurch besteht die Gefahr, dass diese zeitlichen Veränderungen von einer Auswerteelektronik beispielsweise im Hinblick auf die elektronischen und/oder mechanischen Parameter der Verstelleinrichtung falsch interpretiert werden.

Die Erfindung ermöglicht es, für ausgewählte Zustände bzw. Zustandskombinationen speziell angepasste, zugeordnete Sätze von Gewichten für das neuronale Netz der Steuerungsvorrichtung vorzusehen. Diese Mehrzahl an Gewichtssätzen sind in einer der Elektronikeinrichtung zugeordneten Speichereinheit abgelegt und stehen beim Eintritt des entsprechenden Zustands bzw. der Zustandskombination hinreichend schnell für das neuronale Netz zur Verfügung.

Bevorzugt ist das neuronale Netz derart ausgebildet und eingerichtet, dass es die Messgrößen so auswertet, dass ein Einklemmschutz für Hindernisse gewährleistet ist, die im Verstellweg des Kraftfahrzeugteiles einklemmen. Das heißt, die Elektronikeinrichtung der Steuerungsvorrichtung umfasst ein Einklemmschutzsystem für Hindernisse im Verstellweg des bewegten Kraftfahrzeugteils.

Es ist von Vorteil, wenn die unterschiedlichen Sätze an Gewichten jeweils unterschiedliche Empfindlichkeiten der Verstelleinrichtung im Hinblick auf das Detektieren im Verstellweg des Kraftfahrzeugteiles einklemmender Hindernisse realisieren. Dadurch erhält das Einklemmschutzsystem abhängig von der festgestellten Federrate des bewegten Kraftfahrzeugteiles unterschiedliche Ansprechschwellen. Beispielsweise beim Kraftfahrzeug-Zustand des Befahrens einer Schlechtwegstrecke oder dem Kraftfahrzeug-Zustand des Zuschlagens einer Kraftfahrzeugtür ist es vorteilhaft, wenn der zum Einsatz kommende Satz an Gewichten bei einer als Fensterhebereinrichtung ausgebildeten Verstelleinrichtung derart ausgebildet ist, dass detektierte Federraten über einem Schwellwert von 20 N/mm ausgeblendet werden. Dies lässt sich beispielsweise dadurch realisieren, dass die Ansprechschwelle des Einklemmschutzsystems für Federraten über 20 N/mm deutlich erhöht ist.

Das auf diese Weise erzielte Ausblenden höherer Federraten führt dazu, dass beispielsweise bei einer Fensterhebereinrichtung die Fälle eines fehlerhaften Stoppens bzw. Reversierens der Fensterscheibe deutlich reduziert werden.

Selbstverständlich lassen sich die Gewichtssätze des neuronalen Netzes derart ausbilden, dass andere Federraten-Schwellwerte als 20 N/mm eingestellt sind. Auf diese Weise lassen sich Anpassungen an die jeweils zu erfüllenden regional unterschiedlichen gesetzlichen Vorschriften vornehmen.

Bevorzugt ist die Elektronikeinrichtung derart ausgebildet, dass sich die Gewichtssätze auf einfache Weise austauschen oder verändern lassen. Eine Art der Veränderung der Gewichtssätze stellt das so genannte "Erlernen" dar. Dabei werden in das neuronale Netz die Eingangs-Messgrößen spezifischer Zustände, beispielsweise typischer Schlechtwegstrecken, eingespeist. Bei diesem Prozess werden die Gewichte variiert, bis das gewünschte Ausgangssignal vorliegt.

Eine vorteilhafte Ausführungsform der Steuerungsvorrichtung umfasst eine Elektronikeinrichtung mit mindestens einer Schnittstelle zur Ermittlung der Zustände von Kraftfahrzeug- und/oder Verstelleinrichtung. Diese Schnittstellen sind üblicherweise als Busknoten eines CAN-(Controller Area Network) oder als LIN-(Local Interconnect Network)-Bussystems ausgebildet.

Weitere Merkmale und Vorteile der Erfindung sollen nachfolgend an den in der Zeichnung dargestellten Ausführungsbeispielen näher erläutert werden. Es zeigen:

| | |
|---|---|
| Fig. 1 | eine schematische Darstellung eines Systems zum Ermitteln der Kraft, mit der eine Antriebseinrichtung einen Fensterheber in einer Kraftfahr- zeugtür zum Verstellen einer Fensterscheibe antreibt; |
| Fig. 2 | eine schematische Darstellung eines im System gemäß Fig. 1 verwend- baren neuronalen Netzes; |
| Fig. 3 bis 6 | zeitliche Darstellungen verschiedener Parameter beim Verstellen des Fensterhebersystems gemäß Fig. 1; |
| Fig. 7 | eine schematische Darstellung eines Eingangsmusters eines Backpro- pagation-Netzwerks; |
| Fig. 8 | eine schematische Darstellung der Vorspannung von Neuronen des Netzwerks gemäß Fig. 7; |
| Fig. 9 bis 11 | weitere Eingangsmuster des Backpropagation-Netzwerks gemäß Fig. 7; |
| Fig. 12 | eine zeitliche Darstellung des Lernerfolges bei vorgegebenen Eingangs- mustern der Netzwerke gemäß den Fig. 7, 9, 10 und 11 bei zwei unter- schiedlichen Spannungen; |
| Fig. 13 | ein schematische Darstellung eines neuronales Adaptionsnetz zur Ermitt- lung einer Referenzperiode bei einer Antriebsmotorspannung von 9 V; |
| Fig. 14 | das neuronale Adaptionsnetz gemäß Fig. 13 zur Ermittlung einer Refe- renzperiode bei einer Antriebsmotorspannung von 16 V; |
| Fig. 15 | eine schematische Darstellung des Drehmomentverlaufs über den Ver- stellweg bei unterschiedlichen Probeläufen der Antriebseinrichtung; |
| Fig. 16 | eine schematische Darstellung der Drehzahldifferenz über den Verstell- weg bei unterschiedlichen Probeläufen der Antriebseinrichtung; |
| Fig. 17 | ein Flussdiagramm zur Verknüpfung des der Verstellkraft des neuronalen Netzes entsprechenden Ausgangswertes mit der erfassten Drehzahldiffe- renz; |
| Fig.18a | das schematische Blockschaltbild einer ersten Ausführungsform einer Steuerungsvorrichtung mit einem neuronalen Netz; |
| Fig. 18b | das schematische Blockschaltbild einer zweiten Ausführungsform einer Steuerungsvorrichtung mit einem neuronalen Netz und |
| Fig. 19 | eine schematische Darstellung der veränderlichen Ansprechschwelle der Steuerungsvorrichtung der Figuren 18a und 18b in Abhängigkeit von der detektierten Federrate eines mit der Verstelleinrichtung bewegten Kraft- fahrzeug-Teiles. |

Fig. 1 zeigt eine schematische Darstellung eines Steuer- und Regelsystems für einen motorisch angetriebenen Fensterheber 2 in einer Kraftfahrzeugtür 1. Der Fensterheber 2 weist eine Hebeschiene 21 auf, an der eine Fensterscheibe 22 als verstellbares Bauteil befestigt ist. Die Hebescheine 21 ist mittels einer Hebevorrichtung 23 und eines zusammen mit dem Fensterheber 2 eine Antriebseinrichtung bildenden Antriebsmotors 3 beweglich, so dass die Fensterscheibe 22 angehoben und abgesenkt werden kann. Der Antriebsmotor 3 wird aus einer Spannungsquelle 5 über eine Schalteinrichtung 4 gespeist, die sowohl die Drehzahl als auch die Drehrichtung des Antriebsmotors 3 bestimmt.

Ein als Steuer- und Regelelektronik dienender Mikroprozessor 60 versorgt die Schalteinrichtung 4 mit Steuer- und Regelsignalen und ist mit einer Bedienungseinheit 7, beispielsweise mit den Tasten oder Schaltern zur Bedienung des Fensterhebers 2, verbunden. Eine temporäre Verbindung kann mit einem Mikrocomputer 8 zur Durchführung einer oder mehrere Lernphasen des Mikroprozessors 60 hergestellt werden.

Da beim Schließen der durch die Fensterscheibe 22 abdeckbaren Türöffnung durch Anheben der Fensterscheibe 22 die Gefahr eines Einklemmens von Körperteilen oder Gegenständen zwischen dem Rand der Fensterscheibe 22 und dem Türrahmen der Kraftfahrzeugtür 1 besteht, ist bei Antriebsmotorisch angetriebenen Fensterhebern eine Einklemmschutzeinrichtung vorgeschrieben, mit der das Einklemmen eines Objekts erkannt wird und zu einem Anhalten bzw. Reversieren des Antriebsmotors 3 und damit der Bewegungsrichtung des Fensterhebers 2 führt.

Der Einklemmschutz muss gewährleisten, dass die auf ein im Verstellweg der Fensterscheibe 22 befindliches Körperteil bzw. auf einen Gegenstand wirkende Einklemmkraft einen gesetzlich vorgeschriebenen Grenzwert nicht überschreitet. Dabei muss im oberen Dichtungsbereich gewährleistet sein, dass einerseits die Fensterscheibe 22 sicher schließt, wozu zur Überwindung des durch die Fensterdichtung gegebenen Widerstandes eine erhöhte Verstellkraft aufgebracht werden muss, andererseits muss diese Verstellkraft aus Sicherheitsgründen derart dimensioniert sein, dass ein 4 mm-Stab erkannt wird und der Einklemmschutz den Fensterheber 2 abschaltet bzw. reversiert. Das bedingt, dass auch Beschleunigungskräfte, die durch äußere Einflüsse, wie eine Schlechtwegstrecke, mit der dadurch bedingten Beschleunigung des Fahrzeugs senkrecht zur Fahrtrichtung sicher erkannt werden, um Fehlfunktionen des Einklemmschutzes auszuschließen.

Zu diesem Zweck wird der zur translatorischen Verstellung der Fensterscheibe 22 eigentlich nur notwendigen Kraft eine als Reversierkraft bezeichnete Kraft aufgeprägt, deren Größe begrenzt ist. Die Summe beider Kräfte ist gleich der von der Antriebseinrichtung abgegebenen Verstellkraft, die zur Verstellung der Fensterscheibe 22 verwendet wird. Die Reversierkraft stellt daher eine Kraftreserve zur Überwindung zusätzlicher Gegenkräfte dar. Sie kann in den verschiedenen Teilbereichen des Gesamt-Verstellweges der Fensterscheibe 22 eine unterschiedliche Begrenzung aufweisen, die beispielsweise aufgrund des hohen Widerstandes der Fensterdichtung im oberen Bereich des Verstellweges, wo die Fensterscheibe 22 in die Türdichtung einläuft, höher gewählt wird als in dem darunter befindlichen Verstellbereich, so dass ein sicheres Einfahren der Fensterscheibe in den Dichtungsbereich gewährleistet ist.

Erfindungsgemäß erfolgt die Steuerung und Regelung der Schalteinrichtung 4 zum Betrieb des Antriebsmotors 3 der Antriebseinrichtung durch ein mittels des Mikroprozessors 60 ausgeführtes neuronales Netz 6, dessen Struktur schematisch in der Fig. 2 dargestellt ist.

Die Bestandteile des in Fig. 2 dargestellten neuronalen Netzes 6 sind Neuronen 10, 11, 12, die aus einem Eingabevektor, einem Gewichtsvektor, und einer Transferfunktion mit einer Aktivierungs- und Ausgabefunktion bestehen. Das neuronale Netz 6 besteht somit aus einer Menge von in Schichten 61, 62, 63, 64 angeordneten Neuronen 10, 11, 12 und gewichteten Verbindungen 14, 15, 16 und besitzt die Struktur eines gerichteten Graphen, für den folgende Einschränkungen und Zusätze gelten:

- Die Knoten des neuronalen Netzes werden durch die Neuronen 10, 11, 12 gebildet
- Die Kanten des neuronalen Netzes heißen Verbindungen
- Es gibt gewichtete Verbindungen zwischen den Neuronen benachbarter Schichten 61,62,63,64
- Die Eingangs- oder Eingabeschicht 61 dient zur Aufnahme der Eingangssignale
- Eine oder mehrere verborgene Schichten 62, 63 dienen der Verarbeitung der von den Eingangsneuronen 10 der Eingabeschicht 61 abgegebenen Signale und erlauben die Abbildung komplexer Funktionen
- Die Ausgangs- oder Ausgabeschicht 64 gibt das aus den verarbeiteten Eingangssignalen ermittelte Resultat ab.

Damit das neuronale Netz 6 in der Lage ist, zu lernen, müssen die einzelnen Eingänge eines Neurons 10, 11, 12 verschieden stark gewichtet werden können. Die Gewichtung bewirkt, dass die Verbindungen zwischen den einzelnen Schichten 61, 62, 63, 64 unterschiedliche Stärke haben, so dass die Verbindungen zwischen der Eingangsschicht 91 und der Ausgangsschicht 94 die durch die Eingangssignale eingegebenen Informationen nicht immer optimal übertragen, sondern

- überhaupt nicht, wenn das Gewicht der Verbindung 0 ist, das heißt, keine Verbindung besteht,
- die Verbindung hemmen, wenn das Gewicht negativ ist, und
- die Verbindung anregen, wenn das Gewicht größer Null ist.

Zur Erfassung eines Einklemmzustandes wird das Abbremsen der Antriebseinrichtung durch einen Anstieg der Periodendauer und/oder der Stromaufnahme eines Antriebsmotors der Antriebseinrichtung ermittelt. Wird bei dieser indirekten Erkennung die Stromaufnahme des Antriebsmotors ermittelt, so werden als Eingangswerte beispielsweise die letzten 12 Stromwerte der Motorstromaufnahme, ein Adaptionsstrom, der das Motormoment bei einer Motorspannung von beispielsweise 13 V wiederspiegelt und die letzten 3 Spannungswerte erfasst. Bei einer Periodenauswertung werden beispielsweise die letzten z.B. 12 Periodenwerte, eine Adaptionsperiode, die bei einer Normierspannung von z.B. 13 V gemessen wird, und die letzten 3 Spannungswerte erfasst. In einer Lernphase wird dabei mit einer Kraftmesszange mit Werten von 2 N/mm und 20 N/mm angelernt, die analog zu den Eingangssignalen den gemessenen Ausgangwert von beispielsweise 0 - 160 N mit ausgibt, so dass das neuronale Netz in der Anwendung einen Teil der Verschiebekraft mit ausgibt und bei einem Einklemmen die aufgebaute Kraft.

Das in Fig. 2 dargestellte neuronale Netz 6 weist in der Eingangsschicht 61 eine Anzahl von 24 Eingangsneuronen 10 auf, an die mit unterschiedlichem Gewicht verschiedene Eingangssignale wie die Periodendauer und/oder die Stromaufnahme des Antriebsmotors 3 gemäß Fig. 1, Spannungswerte, ein den Anlauf des Antriebsmotors 3 angebendes Anlauf-Flag sowie Adaptionsperioden bestehen, die eine zur jeweiligen Position eines in einer Lernphase durchgeführten und abgelegten Referenzhubs zughörige Periode bei einer vorgegebenen Referenzspannung bezeichnen. Die Adaptionsperiode wird - wie nachstehend anhand der Fig. 13 bis 15 näher erläutert wird - in einem kleineren als dem in der Anwendung verwendeten neuronalen Adaptionsnetz berechnet und gemittelt, d.h. bei jeder vollen Umdrehung (4 Viertelperioden) des Antriebsmotors errechnet das neuronale Netz eine neue Adaptionsperiode, die im nächsten Fensterheberhub als Adaptionsperiode zur Verfügung gestellt wird. Der Wertebereich wird hauptsächlich durch vorkommende Minimal und Maximal-Werte bestimmt, wobei versucht wird, die Eingangsmuster Inputs möglichst zwischen 0 und 1 zu legen.

Jedes Eingangsneuron 10 der Eingangsschicht 61 ist über eine Vielzahl von Verbindungen 14, denen unterschiedliche positive oder negative Gewichte zugeordnet sind, mit den verborgenen Neuronen 11 einer ersten verborgenen Schicht 6 verbunden. Auch die verborgenen Neuronen 11 der ersten verborgenen Schicht 62 weisen unterschiedliche positive und negative Gewichte auf und sind über mehrere ebenfalls positiv oder negativ gewichtete Verbindungen 15 mit den verborgenen Neuronen 11 einer zweiten verborgenen Schicht 63 verbunden, deren Eingänge ebenfalls unterschiedlich positiv oder negativ gewichtet sind. Schließlich sind die verborgenen Neuronen 11 der zweiten verborgenen Schicht 63 über ebenfalls positiv oder negativ gewichtete Verbindungen 16 mit einem Ausgangsneuron 12 der Ausgangsschicht 64 verbunden, an dem der aus den Eingangswerten ermittelte Ausgangswert ansteht.

Die Gewichtung der Eingänge und Verbindungen der Neuronen des in Fig. 2 dargestellten mehrstufigen neuronalen Netzes 6 erfolgt nach einer ersten empirischen Vorgabe in einer Lernphase, in der neue Verbindungen entwickelt, existierende Verbindungen gelöscht, die Stärken der Verbindungen durch Veränderung der Gewichte modifiziert, Schwellenwerte und Transferfunktionen modifiziert, neue Neuronen entwickelt und bestehende Neuronen gelöscht werden. Von diesen Möglichkeiten des Lernens in der Lernphase wird bei dem erfindungsgemäß verwendeten neuronalen Netz 6 insbesondere von der Modifikation der Stärke der Verbindungen durch Veränderung der Gewichte, der Modifikation des Schwellenwertes sowie der Modifikation der Transferfunktion Gebrauch gemacht.

In der Lernphase werden im ungelernten Zustand zunächst zufällig Gewichte vergeben. Nach dem Prinzip des überwachten Lernens werden anschließend verschiedene Eingangsmuster vorgegeben und der zugehörige Ausgangswert berechnet. Anschließend wird die Differenz zwischen dem berechneten Ausgangswert und einem vorgegebenen Soll-Ausgangswert bestimmt, aus der dann über die Lernregel das neuronale Netz 6 modifiziert wird. Je größer der Unterschied zwischen dem berechneten Ausgangswert und dem vorgegebenen Soll-Ausgangswert ist, desto mehr werden die Gewichte verändert, so dass der Fehler bzw. die Abweichung des berechneten Ausgangswertes vom vorgegebenen Soll-Ausgangswert von der Ausgangsschicht 64 zu den verborgenen Schichten 63, 62 und dann zur Eingangsschicht 61 zurückgerechnet wird.

Nach Abschluss der Lernphase ist das neuronale Netz 6 in der Lage, aus nicht gelernten, ähnlichen Eingangsmustern den richtigen Ausgangswert zu berechnen. Schwächen in der Funktion des neuronalen Netzes 6 können dabei durch erneutes Lernen bestimmter, vorgegebener Situationen beseitigt werden. Daraus ergeben sich im Vergleich zu bekannten Verfahren zur Ermittlung der Verstellkraft, Einklemmkraft oder Reversierkraft die Vorteile, dass keine Einzelbewertung der Eingangssignale, wie bei der Anwendung des bisherigen Algorithmus, sondern eine Interpretation der Summe aller Eingänge erfolgt. Weiterhin können nichtlineare Zusammenhänge wie das Verhalten des Antriebsmotors 3 gemäß Fig. 1 nachgebildet und mit dem bisherigen Algorithmus nicht oder nur mit Einschränkung auswertbare Signalverläufe korrekt interpretiert bzw. berechnet werden, so dass eine für einen zuverlässigen Einklemmschutz erforderlicher momentaner Kraft-Ausgangswert ermittelt wird. Diese Funktion soll anhand verschiedener in den Fig. 3 bis 6 dargestellter Signalverläufe näher erläutert werden.

Fig. 3 zeigt eine vereinfachte Darstellung des Verlaufs der Periodendauer des Antriebsmotors der Antriebseinrichtung über der Zeit t beim Anheben einer Fensterscheibe von ihrer untersten in die oberste Stellung, in der die Fensterscheibe die Türöffnung einer Kraftfahrzeugtür vollständig abdeckt.

In der Anlaufphase A sinkt die Periodendauer zunächst stark ab und steigt nach einem Minimum stark an. Das Absinken der Periodendauer ist gleichbedeutend mit einer Beschleunigung des Antriebsmotors in der Anlaufphase A, die mit einem entsprechenden Kraftaufbau verbunden ist. Nach Beendigung der Anlaufphase A bleibt die Periodendauer nahezu konstant bzw. steigt geringfügig an, da die Reibung infolge der Führung der Fensterscheibe in der Fensterdichtung mit der zurückgelegten Wegstrecke zunehmen kann. Da beim Einlauf E der Fensterscheibe in die obere Fensterscheibendichtung die Reibung stark zunimmt, steigt die Periodendauer sprungartig an, verläuft anschließend nahezu linear bzw. geringfügig ansteigend bis sie mit dem Erreichen des oberen Anschlages steil zunimmt.

Dieser charakteristische Verlauf der Periodendauer beim Schließen einer Fensterscheibe führt bei dem bekannten Einklemmschutzverfahren und Einklemmschutzeinrichtungen zu hohen Kräften in der Anlaufphase A. Veränderungen auf der von der Fensterscheibe zurückgelegten Wegstrecke können nur durch Parameteränderungen kompensiert werden, damit beispielsweise beim Dichtungseinlauf die Fensterscheibe infolge erhöhter Reibung nicht stehen bleibt bzw. aufgrund des Ansprechens des Einklemmschutzes reversiert.

In den Fig. 4a und 4b sind zwei unterschiedliche Verfahren zur Erfassung eines Einklemmvorganges durch einen Verlauf der Periodendauer über der Zeitachse t dargestellt.

Fig. 4a zeigt eine rein relative Erfassung der Periodendauer über der Zeit t, wobei ein Einklemmfall durch einen Anstieg der Periodendauer, der mit einem entsprechenden Kraftaufbau verbunden ist, festgestellt wird. Bei der rein relativen Erfassung wird nur die zeitliche Veränderung der Periodendauer beim Verstellen der Fensterscheibe überwacht und beim Überschreiten einer Auslöseschwelle AS die Fensterscheibe angehalten bzw. reversiert, jedoch werden keine absoluten Werte erfasst oder überwacht.

Fig. 4b zeigt den Periodenverlauf über der Zeit t bei einem rein absoluten Erfassungssystem, bei dem ein Periodenanstieg ebenfalls mit einem entsprechenden Kraftaufbau verbunden ist. Die Auslösung des Einklemmschutzes erfolgt bei Überschreiten eines vorgegebenen Absolutwertes AW der Periodendauer gegenüber einer vorprogrammierten Referenzkurve R.

Fig. 5 zeigt einen schematischen Verlauf der Periodendauer über der Zeit t im Falle einer niedrigen Federrate, d.h. einer Federrate FR von beispielsweise 2 N/mm des Verstellsystems. Der zeitliche Verlauf verdeutlicht den langsamen Kraftaufbau infolge des geringen Anstiegs der Periodendauer über den Verstellweg nach Beendigung der Anlaufphase, wobei beispielsweise bei Anwendung eines relativen Erkennungssystems infolge des geringen Anstiegs und bei Anwendung des absoluten Erkennungssystems infolge der langen Zeitdauer bis zum Erreichen eines Abschaltkriteriums hohe Kräfte aufgebaut werden können.

Fig. 6 zeigt schematisch den Verlauf der Periodendauer T, der Position P und der (Verstell-) Kraft über der Zeitachse t beim Auftreten einer äußeren Beschleunigung, beispielsweise beim Befahren einer Schlechtwegstrecke oder in Folge einer lokal und/oder zeitlich begrenzten Leichtgängigkeit im Verstellweg. Aufgrund der unterstützenden Wirkung der Beschleunigungskräfte oder der Reduzierung bzw. des Wegfalls von Reibungskräften bei der Scheibenbewegung sinkt die Periodendauer T kurzzeitig ab, das heißt, die Fensterscheibe wird kurzzeitig beschleunigt. Wird der Verstellkraft in dem Beschleunigungsbereich B eine Kraft überlagert, so tritt ein steiler Kraftaufbau K auf, der mit den bekannten Einklemmschutzverfahren nicht erkannt wird, da nur positive Periodenveränderungen detektiert werden. In dem in Fig. 6 gestrichelt dargestellten Beschleunigungsbereich B sind somit die bekannten Einklemmschutzregelungen nicht funktionsfähig.

Aufgrund der vorstehend anhand der zeitlichen Darstellungen der Periodendauer in den Fig. 3 bis 6 treten bei der Anwendung der bekannten Einklemmschutzverfahren folgende Probleme und Nachteile auf:

a) Es treten hohe Kräfte bei niedrigen Federraten und eine schlechte Erkennung eines 4mm-Stabes in allen Richtungen auf,

b) Es erfolgt eine Überkompensation bei Spannungssprüngen und Schlechtweg- strecken mit der Folge hoher Offsets mit sehr hohen Kräften, so dass bei- spielsweise ein Spannungseinbruch im Bordnetz, der mit einem Anstieg der Periodendauer verbunden ist, durch ein Offset kompensiert wird, wodurch ein Überschwingen und damit verbundene große Einklemmkräfte auftreten,

c) Eine Krafterkennung ist nur durch einen Anstieg in der Periodendauer mög- lich, bei einer Degression der Periodendauer (Fig. 6) können hohe Kräfte auf- treten,

d) Es treten Veränderungen im Verlauf des Verstellweges des verstellbaren Bau- teils auf, zu denen schleichende Veränderungen wie Alterung, Dichtungsab- rieb und Einlaufen des Fensterhebers sowie Motorunstetigkeiten gehören, die sich stets an derselben Position zeigen, und die durch Parameteränderungen kompensiert werden müssen,

e) In der Anlaufphase treten hohe Kräfte auf.

Bei den bekannten Einklemmschutzverfahren erfolgt eine getrennte Betrachtung der Eingangssignale Periode und Spannung. Ein Spannungsfilter wirkt dabei ab einer Ansprechschwelle nur in einer Richtung und eine Krafterkennung ist ausschließlich durch die Erfassung eines Anstiegs der Motorperiode möglich. Bei der erfindungsgemäßen Anwendung eines neuronalen Netzes werden dagegen im Unterschied zu dem bekannten Einklemmschutzverfahren die Eingangssignale Periode und Spannung miteinander verknüpft, so dass kein Spannungsfilter benötigt wird und Periodenänderungen in jeder Richtung detektiert werden. Weiterhin wird im Unterschied zu dem bekannten Verfahren nicht ein Offset adaptiert, sondern die Periodendauer des Antriebsmotors.

In Bezug auf die vorstehend in den Fig. 3 bis 6 dargestellten Problemfälle bei der richtigen Erkennung und Auslösung eines Einklemmschutzes führt der Einsatz eines neuronalen Netzes nach Abschluss der Lernphase zu folgenden Ergebnissen:

1. Niedrige Federraten werden einstellbar erkannt, d.h. durch die Auswahl der Lerndaten und die Vorgabe des Sollausgangs- oder Kraftwertes kann festgelegt werden, wie empfindlich das System bei niedrigen Federraten sein soll. Dies wird durch eine Festlegung des Arbeitspunktes zwischen der in Fig. 4a und 4b dargestellten relativen und absoluten Arbeitsweise erlernt, wobei der Arbeitspunkt stufenlos einstellbar ist. Durch diese Mischarbeitsweise werden niedrige Federraten und damit ein langsamer Anstieg in der Periodendauer dadurch erkannt, dass große Abweichungen vom absoluten Anteil entstehen.

2. Bei den bekannten Einklemmschutzverfahren wird ein Spannungseinbruch kompensiert, was dazu führt, dass die Verlangsamung des Systems durch einen Offset auf den Abschaltwert ausgeglichen wird. Das neuronale Netz erhält dagegen die Information des Spannungseinbruchs als eine Verlangsamung der Periodendauer, wobei alle Informationen gleichberechtigt behandelt werden. Dadurch können Spannungssprünge angelernt werden, d.h. das System lernt das komplexe, nicht lineare dynamische Verhalten des Antriebsmotors. Ein Spannungsanstieg, beispielsweise in Form einer Spannungsrampe, führt somit nicht zu hohen Kräften, so dass keine hohen Kraftschwankungen, beispielsweise bei einem Anliegen einer Sinusspannung, entstehen. Der bei der Mischarbeitsweise erfasste absolute Anteil führt dazu, dass beim Befahren einer Schlechtwegstrecke festgestellt werden kann, ob die Periodendauer noch in einem gültigen Bereich liegt.

3. Durch den bei der Mischarbeitsweise erfassten absoluten Anteil wird weiterhin sichergestellt, dass auch bei einer Beschleunigung die Überlagerung eines Kraftaufbaus (Fig. 6) rechtzeitig und sicher erkannt wird, was bei den bekannten Einklemmschutzverfahren nicht möglich ist, da es immer einen nominellen Anstieg der Periodendauer geben muss, um einen Kraftaufbau zu detektierten.

4. Veränderungen am Verstellweg des verstellbaren Bauteils werden adaptiv erlernt, so dass schleichende Veränderungen, wie Alterung, Dichtungsabrieb und Einlaufen des Fensterhebers sowie Motorunstetigkeiten, die sich stets an derselben Position zeigen, durch Adaption ausgeglichen werden und keine Krafterhöhungen oder eine fehlerhafte Abschaltung oder ein fehlerhaftes Reversieren auftreten.

5. Bei den bekannten Einklemmschutzverfahren kann bei Anwendung eines relativen Erkennungssystems das Anlaufverhalten der Antriebseinrichtung nur schwer von einem Einklemmfall unterschieden werden. Beim Einsatz eines neuronalen Netzes wird dieser Vorgang erlernt und gegebenenfalls durch ein Anlaufflag markiert.

6. Bei den bekannten Einklemmschutzverfahren werden unterschiedliche Parameter zur Erfassung eines Einklemmfalles eingesetzt, wobei nur ein sinnvolles Zusammenspiel dieser verschiedenen Parameter zu einer hinreichend genauen Krafterfassung führt. Dagegen entscheidet beim Einsatz eines neuronalen Netzes nur ein einzelner Wert, der über das Abschalten bzw. Reversieren der Antriebseinrichtung entscheidet, nämlich der Ausgangswert der Ausgangsschicht, so dass eine kontinuierliche Einstellung der den Einklemmschutz auslösenden Abschaltkraft möglich ist.

In den Fig. 7 bis 12 ist ein Backpropagation Netzwerk schematisch vereinfacht dargestellt, das zum Ermitteln der Kraft, mit der eine Antriebseinrichtung über einen Fensterheber eine Fensterscheibe als verstellbares Bauteil verstellt oder ein im Verstellweg der Fensterscheibe befindliches Objekt einklemmt und damit einen Abschalt- oder Reversierwert abgibt, eingesetzt werden kann.

Fig. 7 zeigt ein erstes Eingangsmuster des Backpropagation Netzwerks mit drei Schichten, nämlich einer Eingabe- oder Eingangsschicht 61, einer verborgenen Schicht oder "Hidden-Schicht" 62 und einer Ausgangs- oder Ausgabeschicht 64. Die in der Eingangsschicht 61 und der verborgenen Schicht 62 angeordneten Neuronen 101, 102, 103, 111, 112 sind durch Kanten mit der jeweils darüber liegenden Schicht 62 bzw. 64 verbunden, wobei jede Kante einen an das betreffende Neuron angeschriebenen Gewichtswert symbolisiert.

Die Eingangsschicht 61 ist mit den Eingangswerten Periodendauer, Motorspannung und Adaptionsperiode beaufschlagt, die in einen für die Eingangsneuronen 101, 102, 103 passenden Wertebereich gelegt sind. Das mit der Periodendauer beaufschlagte erste Eingangsneuron 101 weist eine Gewichtung von 0,423, das mit der Motorspannung beaufschlagte zweite Eingangsneuron 102 weist eine Gewichtung von 0,524 und das mit der Adaptionsperiode beaufschlagte dritte Eingangsneuron 103 weist eine Gewichtung von 0,279 auf.

Die verborgene Schicht 62 enthält zwei verborgene Neuronen 111, 112, die eingangsseitig mit den Ausgängen der Eingangsneuronen 101, 102, 103 verbunden sind. Das erste verborgene Neuron 111 ist über Verbindungen mit den Verbindungsgewichten -0,893, - 3,446 und 3,376 mit den Ausgängen der Eingangsneuronen 101, 102, 103 verbunden. Das zweite verborgene Neuron 112 ist über Verbindungen mit den Verbindungsgewichten 3,869, 3,376 und -0,514 mit den Ausgängen der Eingangsneuronen 101, 102, 103 verbunden.

Die Ausgangs- oder Ausgabeschicht 64 wird durch ein Ausgangsneuron 12 dargestellt. Die Höhe dieses Ausgangswertes entscheidet später über einen für die jeweilige Spannung einstellbaren Abschaltwert über das Reversieren oder das Fortsetzen des Fensterheberlaufes.

Zusätzlich besitzen die Neuronen 111, 112 und 12 der höherliegenden verborgenen Schicht 62 und der Ausgangsschicht 64 einen Schwellwert oder Biaswert, der den Ausgang der Transferfunktionen in den stetigen Bereich verschiebt. Der Biaswert und die Gewichte sind Konstanten, die in der Anwendung bzw. einem Serieneinsatz nicht mehr verändert, beziehungsweise nachgelernt werden. Sie werden einmal vor dem Serieneinsatz ermittelt und beispielsweise in einem EEProm abgelegt. Der Algorithmus kann dann, falls sich Schwachpunkte im Algorithmus aufzeigen, durch eine neue Parametereinstellung, d.h. durch Nachlernen verbessert werden. In der Anwendung jedoch bleiben die Gewichte bestehen.

In der Lernphase werden dem neuronalen Netz Eingangsmuster präsentiert und die dazugehörigen definierten Ausgangswerte vorgegeben. Je mehr der vorgegebene Ausgangswert von dem vom neuronalen Netz mit den jeweiligen Gewichten und Biaswerten errechneten Ausgangswert abweicht, umso mehr werden die Gewichte und der Biaswert verändert. Dabei werden beispielsweise folgende spezielle Muster ausgewählt:

- Spannungssprünge bei einem Fensterheberlauf mit ansteigender Periode, einer einbrechenden Spannung und Ermittlung der Adaptionsperiode mit einem dazugehörigen Ausgangswert von 0, da das neuronale Netz in diesem Fall keine Kraft erkennen soll,

- Zangenläufe mit einer Kraftmesszange mit rückgekoppelter Kraft aus der Kraftmesszange als Ausgangswert für das neuronale Netz mit ansteigender Periodendauer, einbrechender Spannung und Ermittlung der Adaptionsperiode

- Anlernen verschiedener Federraten von beispielsweise 20 N/mm und 2 N/mm usw.

Mit den in Fig. 8 dargestellten, über den Neuronen 111, 112 und 12 eingetragenen BiasWerten 2,536 für das erste verborgene Neuron 111 und -0,389 für das zweite verborgene Neuron 112 sowie 0,775 für das Ausgangsneuron 12, den Gewichten, den Transferfunktionen und den Eingangswerten wird der zu dem jeweiligen Eingangsmuster gehörige Ausgangswert ermittelt. Die Ermittlung des Ausgangswertes erfolgt folgendermaßen, wobei in den Fig. 7, 10, 11 und 12 der jeweils berechnete Ausgangswert unterhalb des Ausgangsneurons 12 oder der verborgenen Neuronen 111, 112 angegeben ist:

Zunächst berechnet sich der Ausgang des ersten verborgenen Neuronens 111 wie folgt:

$$\sum = Bias(i) + wij * Eingang(j)$$

wobei i das i-te Neuron in der nächst höheren Schicht und w die Gewichtung darstellen und j die Zählvariable für die Eingangsschicht 61 ist. Die Gewichte werden mit den Eingangswerten multipliziert und dann aufsummiert, woraus sich für das erste verborgene Neuron 111 ergibt:

$$\sum_{111} = 0{,}423 \cdot (-0{,}893) + 0{,}524 \cdot (-3{,}446) + 0{,}279 \cdot 3{,}376 + 2{,}536 = 1{,}294$$

Diese Summe wird dann in die Transferfunktion eingesetzt. Die hier beispielsweise verwendete Transferfunktion ist ein Tangenshyberbolicus. Daraus ergibt sich der Ausgangswert des ersten verborgenen Neurons 111 zu

$$\text{Ausgang}_{111} = 0{,}859$$

Und der Ausgangswert des zweiten verborgenen Neurons 112 zu

$$\sum\nolimits_{112} = 0{,}423 \cdot 3{,}869 + 0{,}524 \cdot (-0{,}164) + 0{,}279 \cdot (-0{,}514) - 0{,}389 = 1{,}018$$

$$\text{Ausgang}_{112} = \text{TANH}(1{,}018) = 0{,}77$$

und der Ausgangswert des Ausgangsneurons 12 zu

$$\sum\nolimits_{12} = 0{,}77 \cdot 2{,}094 + 0{,}859 \cdot (-2{,}733) + 0{,}775 = 0{,}037$$

$$\text{bzw. Ausgang} = \text{TANH}(0{,}037) = 0{,}037$$

Beim ersten, in Fig. 7 dargestellten Eingangsmuster liegen die Werte für die Periodendauer bei 0,423 und die Spannung bei 0,524 was einer Spannung von 10V entspricht. Die Adaptionsperiode liegt bei einem niedrigerem Wert, nämlich bei 0,279.

Nachfolgend werden 3 weitere, in den Figuren 10, 11 und 12 schematisch dargestellte Eingangsmuster betrachtet.

Das in Fig. 9 dargestellte zweite Eingangsmuster unterscheidet sich von dem in Fig. 7 dargestellten ersten Eingangsmuster stark durch die Periodendauer von 1,001 gegenüber 0,423, während die Spannung und die Adaptionsperiode mit 0,456 bzw. 0,277 annähernd konstant bleiben. Ebenfalls unverändert bleiben die Verbindungsgewichte, mit denen die verborgenen Neuronen 111, 112 mit den Ausgängen der Eingangsneuronen 101, 102, 103 verbunden sind, sowie die Bias-Werte der verborgenen Neuronen 111, 112 und des Ausgangsneurons 12.

Daraus ergeben sich wie vorstehend an Hand der Fig. 7 beschrieben die Ausgangswerte 0,75 für das erste verborgene Neuron 111 und 0,997 für das zweite verborgene Neuron 112 sowie 0,67 für das Ausgangsneuron 12.

Bei dem in Fig. 10 dargestellten dritten Eingangsmuster ist der Spannungswert bei 16V angenommen mit einem Eingangswert von 0,824. Die Periodendauer liegt bei 0,245 und die Adaptionsperiode geringfügig modifiziert bei 0,261. Daraus ergibt sich der Ausgangswert des Ausgangsneurons 12, bei dem aus dem Eingangsmuster kein Einklemmen erkannt wird zu 0,241. Dennoch können solche Eingangsmuster von Einklemm-Mustern unterschieden werden, was an Hand der schematischen Darstellung des Backpropagation Netzwerks in Fig. 12 verdeutlicht wird.

Bei dem Eingangsmuster gemäß Fig. 11 ist die Motorspannung mit dem Wert 0,774 leicht eingebrochen, während die Periodendauer gegenüber dem Vergleichswert von 0,245 auf 0,382 angestiegen ist.

In den Fig. 12a und 12b sind zwei Diagrame dargestellt, die den Lernerfolg des in den Fig. 7 und 9 bzw. 10 und 11 dargestellten neuronalen Netzes bei Spannungswerten von 10 V und 16 V sowie den in den Fig. 7 und 9 bzw. 10 und 11 vorgegebenen Eingangsmustern grafisch darstellen. Die sich aus den Backpropagation Netzwerken gemäß den Fig. 9 und 11 ergebenden Lernvorgaben sind in Form der vorgegebenen Einklemmkraft in jeweils dick ausgezogenen Linien dargestellt, während die sich aus den jeweiligen Eingangsmustern ergebenden Ausgangswerte entsprechend den Backpropagation Netzwerken gemäß den Fig. 7 und 10 durch die dünn ausgezogenen Kurvendarstellungen repräsentiert werden.

Fig. 13 zeigt den Aufbau eines neuronalen Adaptionsnetzes 9 zur Ermittlung positionsabhängiger Adaptionswerte bei unterschiedlichen Klemmenspannungen des Antriebsmotors 3 gemäß Fig. 1 und ist als eigenständiges neuronales Netz konzipiert, dessen Ausgangs- oder Ausgabeschicht 94 Spannungsreferenzwerte an die Eingangs- oder Eingabeschicht 61 des neuronalen Netzes gemäß Fig. 2 abgibt. Es hat die Aufgabe, eine für das momentane Antriebsmotorverhalten typische Referenzkurve für eine Referenzspannung zu ermitteln, auch wenn die momentan am Antriebsmotor anliegende Spannung von der Referenzspannung abweicht.

Ein Eingangsneuron 10 des neuronalen Netzes 6 gemäß Fig. 2 zur Ermittlung eines der Verstell- oder Überschusskraft der Antriebseinrichtung oder eines eingeklemmten oder nicht eingeklemmten Zustandes entsprechenden Ausgangswertes erhält positionsabhängig die vom neuronalen Adaptionsnetz 9 gemäß Fig. 13 in der Ausgangs- oder Ausgabeschicht 94 abgegebenen Adaptionswerte, so dass dieser Eingang des neuronalen Netzes 6 gemäß Fig. 2 als Information für die momentan vorliegende Verschiebekraft, Schwergängigkeit oder Leichtgängigkeit des Antriebssystems dient. Zusätzlich wird diese Information auch für den Einlauf der Fensterscheibe 22 gemäß Fig. 2 in die Fensterscheibendichtung verwendet, um das Gesamtsystem unempfindlicher zu machen.

Würde man zur Adaption an den jeweiligen Spannungswert die Gleichung

$$\frac{n_1}{n_2} = \frac{U_1}{U_2}$$

anwenden, in der $n_1$ der Drehzahl bei der Spannung $U_1$ und $n_2$ der Drehzahl bei der Spannung $U_2$ entspricht, so wäre das auf die Referenzspannung interpolierte Ergebnis zu ungenau für ein absolutes System und sehr stark vom Motortyp abhängig. Demgegenüber wird das neuronale Adaptionsnetz auf einen speziellen Antriebsmotor angelernt und errechnet aus den Perioden und der aktuellen Spannung eine für das Moment festgelegte Referenzperiode bei der Referenzspannung. Diese Referenzperiode ist positionsabhängig und dient dem übergeordneten neuronalen Netz 6 gemäß Fig. 2 als Eingangswert bei der jeweils nächsten Verstellbewegung, d.h. beim nächsten Fensterhub.

Während der Fehler bei der direkten Umrechnung über die obenstehende Formel bei 10-15% Bandbreite liegt, tritt bei einer Berechnung über das Adaptionsnetz ein maximaler Fehler von 4%, bei nicht abknickender Kennlinie sogar bei maximal 2% Bandbreite auf. Diese erhöhte Genauigkeit kommt der Genauigkeit bei der Ermittlung der Verstellkraft mittels des neuronalen Netzes 6 gemäß Fig. 2 zugute, denn ein Fehler von 12% Bandbreite ergibt bei einer Federrate im Gesamtsystem von 2 N/mm einen Kraftunterschied von 40N, bei einer Federrate von 10N/mm einen Kraftunterschied von 18N. Daraus resultiert eine Kraftschwankung bei niedrigen Federraten von maximal 7N und bei höheren Federraten 10N/mm eine Kraftschwankung von maximal 3N, wenn ein neuronalen Adaptionsnetz verwendet wird.

Das in Fig. 13 als Beispiel dargestellte neuronale Adaptionsnetz 9 bildet ein eigenständiges neuronales Netz. Es besteht wie das neuronale Netz 6 zur Ermittlung eines der Verstell- oder Überschusskraft der Antriebseinrichtung oder eines eingeklemmten oder nicht eingeklemmten Zustandes entsprechenden Ausgangswertes aus einer Menge von in Schichten 91, 92, 94 angeordneten Neuronen 30, 31, 32, 33, 34, 35 und gewichteten Verbindungen 36, 37 und besitzt die Struktur eines gerichteten Graphen, für den die vorstehend im Zusammenhang mit dem neuronale Netz 6 gemäß Fig. 2 genannten Einschränkungen und Zusätze gelten.

Das empirisch bis zur Erzielung der besten Lernergebnisse ermittelte neuronale Adaptionsnetz 9 weist in der untersten Schicht bzw. Eingangsschicht 91 zwei Eingangsneuronen 30, 31 auf, die mit unterschiedlichem Gewicht die Eingangssignale Periodendauer und Antriebsmotorspannung bezeichnen. Das der Periodendauer entsprechende Eingangsneuron 30 kann einen Mittelwert aus wahlweise 4, 8, 12 Perioden darstellen, um beispielsweise die Unsymmetrie des Ringmagneten des Antriebsmotors auszugleichen, während das der Antriebsmotorspannung entsprechende Eingangsneuron 31 den jeweils aktuell gefilterten Spannungswert repräsentiert.

Da sowohl die Periodendauer für jede Viertelumdrehung des Antriebsmotors als auch die Spannung immer vorliegt, stehen der mit hoher Taktfrequenz arbeitenden Adaption zu jeder Zeit die benötigten Werte zur Verfügung und müssen nicht mit einer Vollumdrehung des Antriebsmotors synchronisiert werden. Der Ausgangswert des neuronalen Adaptionsnetzes 6 wird dann verwendet, wenn die Position des zu verstellenden Bauteils sich um eine Umdrehung des Antriebsmotors geändert hat.

Jedes Eingangsneuron 30, 31 der Eingangsschicht 91 ist über eine Vielzahl von Verbindungen 36, denen unterschiedliche Gewichte zugeordnet sind, mit drei verborgenen Neuronen 32, 33, 34 einer verborgenen Schicht 92 verbunden. Die drei verborgenen Neuronen 32, 33, 34 der verborgenen Schicht 92 weisen unterschiedliche positive und negative Gewichte auf und sind über mehrere positiv oder negativ gewichtete Verbindungen mit einem Ausgangsneuron 35 der Ausgangsschicht 94 verbunden, an der eine aus den Eingangswerten ermittelte, auf die Referenzfrequenz normierte Adaptionsperiode ansteht.

Die Gewichtung der Eingänge und Verbindungen der Neuronen des in Fig. 13 dargestellten mehrstufigen neuronalen Adaptionsnetzes 9 erfolgt nach einer ersten empirischen Vorgabe in einer Lernphase, in der neue Verbindungen entwickelt, existierende Verbindungen gelöscht, die Stärken der Verbindungen durch Veränderung der Gewichte modifiziert, Schwellenwerte und Transferfunktionen modifiziert, neue Neuronen entwickelt und bestehende Neuronen gelöscht werden.

Die Gewichte und der Bias stellen die Intelligenz des neuronalen Adaptionsnetzes dar und bilden das Verhalten des Antriebsmotors zwischen zwei extremen Spannungen von beispielsweise 9 und 16V nach.

Um das Verhalten des Antriebsmotors bei allen möglichen Momenten zur Ermittlung der Netzgewichte optimal anzulernen, wird der Antriebsmotor in eine Motorbremse eingespannt, die das Signal für das Moment liefert. Der Antriebsmotor wird mit einer Elektronik betrieben und die Spannung und Periode ausgelesen. Diese Informationen werden synchron zum Moment dokumentiert und das Aufnahmeverfahren bei jeder Spannung von der Leerlaufdrehzahl bis zum Blockieren des Antriebssystems durchgeführt. Zwischen jeder Messung wird eine längere Pause eingelegt, damit sich der Antriebsmotor wieder abkühlt.

Wird eine erhöhte Genauigkeit bei unterschiedlichen klimatischen Bedingungen benötigt, so wird derselbe Antriebsmotor mit unterschiedlichen Temperaturen betrieben, wobei die Motortemperatur selbst konstant gehalten wird. Sie dient stattdessen als möglicher we iterer Eingang für das neuronale Adaptions netz. Mittels der Leerlaufdrehzahl und der Spannung kann die Motortemperatur ebenfalls mit einem neuronalen Temperaturnetz ermittelt werden. Die so ermittelte Motor temperatur kann zusätzlich auch für den Tem peraturschutz des Antriebsmotors verwendet werden, da sie genauer ist als ein am Fahrzeugäußeren angebrachter Temperatursensor.

In den Fig. 13 und 14 sind zur Demonstration der Genauigkeit des neuronalen Adaptionsnetzes 9 zwei Beispiele für die Ermittlung einer Referenzperiode bei Motorspann ungen von 9 V bzw. 16 V dargestellt. Bei gleichem Drehmoment wird jeweils der positionsabhängige Adaptionswert des neuronalen Adaptionsnetzes wie folgt berechnet:

| | Eingang 1 = Periode | Eingang 2 = Spannung |
|---|---|---|
| Fall1: 9V | 0.946065 | 0.379684 |
| Fall2: 16V | 0.415552 | 0.691795 |
| $Bias_1$ (Verb. Neuron 32) | 1.1 7752 | |
| $Bias_1$ (Verb. Neuron 33) | -2.35308 | |
| $Bias_1$ (Verb. Neuron 34) | -0.09405 | |
| $Bias_1$ (Ausgangsneuron) | -3.15073 | |

Als Transferfunktion wird beispielsweise die Logistic-Funktion gewählt:

$$Ausgang_i = \frac{1}{1+e^{-(Summe_i + Bias_i)}}$$

Die Summe des ersten verborgenen Neurons 32 beträgt

$$Summe_1 = Eingang\ 1 * Gewicht_{11} + Eingang\ 2 * Gewicht_{12} + Bias_1 =$$
$$0.946O65 * - 4.766 + 0.379684 * 0.006 + 1.17752 = - 3.3291$$

Der Ausgangswert des ersten verborgenen Neuron 32 beträgt somit

$$Ausgang_i = \frac{1}{1+e^{-(-3.3291)}} = 0.034586$$

Dieses Ergebnis steht gerundet unter dem ersten verborgenen Neuron 32 des in Fig. 13 dargestellten neuronalen Adaptionsnetzes.

Nach dieser Vorgehensweise lassen sich die Ausgangswerte des zweiten und dritten verborgenen Neurons 33, 34 sowie des Ausgangsneurons 35 berechnen:

$$Summe_2 = -0.3055108$$
$$Ausgang_2 = 0.42421088$$

(fortgesetzt)

| | | |
|---|---|---|
| $Summe_3$ | = | 1.56893044 |
| $Ausgang_3$ | = | 0.82763108 |
| $Summe_4$ | = | -0.9786242 |
| $Ausgang_4$ | = | 0.27316486 = Ergebnis bei 9V |

In gleicher Weise kann die Referenzperiode für eine Motorspannung von 16V mit dem neuronalen Adaptionsnetz wie folgt berechnet werden

| | | |
|---|---|---|
| $Summe_1$ | = | -0.7989789 |
| $Ausgang_1$ | = | 0.31024398 |
| $Summe_2$ | = | 0.93062225 |
| $Ausgang_2$ | = | 0.71720151 |
| $Summe_3$ | = | 0.81829026 |
| $Ausgang_3$ | = | 0.69387329 |
| $Summe_4$ | = | -0.9684947 |
| $Ausgang_4$ | = | 0.27518065 = Ergebnis bei 16V |

Die Fehlerrate bei den vorstehend dargestellten extremen Spannungswerten beträgt:

$$1-\frac{0.27518065}{0.27316486}=0.73\%$$

Der Fehler, der bei der Annäherung $\frac{n_1}{n_2}=\frac{U_1}{U_2}$ entstehen würde, läge je nach Antriebsmotor im Vergleich dazu zwischen 10 und 15%.

Um ein fehlerhaftes Reversieren des Antriebsmotors beispielsweise aufgrund von Änderungen der Verstellkraft des Fensterhebersystems oder Veränderungen des Antriebsmotors zu vermeiden, wird als zusätzliches Kriterium zum Erkennen eines Einklemmvorganges die Federrate eines eingeklemmten Gegenstandes berücksichtigt.

Weist der Antriebsmotor beispielsweise einen vierpoligen Ringmagneten auf, so wird die Drehzahldifferenz zwischen der nullten und der vierten Periode des Antriebsmotors ermittelt und dieser Wert mit dem der Verstellkraft der Antriebseinrichtung entsprechenden Ausgangswert des neuronalen Netzes 6 gemäß Fig. 2 verknüpft. Die Funktionsweise dieser Verknüpfung soll anhand der Fig. 15 bis 17 näher erläutert werden.

Fig. 15 zeigt den Verlauf des Drehmomentes M über den Verstellweg s bei vier verschiedenen Schließvorgängen a bis d und Fig. 16 den Verlauf der Federrate Fr bzw. der Drehzahldifferenz von zwei Vergleichsperioden über den Verstellweg s bei den in Fig. 15 dargestellten Schließbewegungen einer Fensterscheibe 22 gemäß Fig. 1. Der Drehzahldifferenz-Schwellwert SF definiert dabei die Grenze, ab der niedrige Federraten beginnen und beträgt beispielsweise 20 N/mm.

Durch die Vorgabe von zwei Abschaltwert-Schwellwerten $ASW_1$ und $ASW_2$ des Ausgangswertes des neuronalen Netzes und eines Drehzahldifferenz-Schwellwertes SF können die nachfolgend beschriebenen Reversierfälle unterschieden werden.

Überschreitet entsprechend der Kurve a der Ausgangswert M des neuronalen Netzes nach dem Verstellweg $s_1$ den ersten Abschalt-Schwellwert $ASW_1$ und ist an dieser Stelle die Drehzahldifferenz kleiner als der vorgegebene Drehzahldifferenz-Schwellwert SF, so wird der Antriebsmotor auch dann nicht reversiert, wenn im weiteren Verlauf der Drehzahldifferenz-Schwellwert SF beispielsweise nach dem Verstellweg $s_7$ überschritten wird.

In diesem Falle wird ein Reversieren des Antriebsmotors verriegelt bzw. gesperrt, so dass bei einem Überschreiten des Drehzahldifferenz-Schwellwertes SF im weiteren Verlauf des Verstellweges kein Reversieren des Antriebsmotors möglich ist. Nur wenn beim weiteren Verstellen der zweite Abschalt-Schwellwert S2 überschritten wird, erfolgt ein sofortiges Reversieren des Antriebsmotors.

Nur wenn während dieses Laufs der zweite Abschalt-Schwellwert $ASW_2$, der größer ist als der erste Abschalt-Schwellwert $ASW_1$ überschritten wird, wird der Antriebsmotor reversiert.

Dasselbe Kriterium trifft auf die Kurve b zu, die nach dem Verstellweg $s_2$ kurzeitig den ersten Abschalt-Schwellwert $ASW_1$ überschreitet und dann wieder unter den ersten Abschalt-Schwellwert $ASW_1$ fällt.

Überschreitet der Ausgangswert M des neuronalen Netzes entsprechend der Kurve c den ersten Abschalt-Schwellwert $ASW_1$ beim Verstellweg $s_3$, bei dem die Drehzahldifferenz ebenfalls kleiner ist als der Drehzahldifferenz-Schwellwert SF, so erfolgt ein sofortiges Reversieren des Antriebsmotors erst dann, wenn der zweite Abschalt-Schwellwert $ASW_2$ an der Stelle $s_5$ überschritten wird.

Überschreitet entsprechend der Kurve d der Ausgangswert M des neuronalen Netzes den ersten Abschalt-Schwellwert $ASW_1$ nach dem Verstellweg $s_4$ und ist an dieser Stelle die Drehzahldifferenz größer als der Drehzahldifferenz-Schwellwert SF, so erfolgt ein sofortiges Reversieren des Antriebsmotors.

In Fig. 17 sind die vorstehenden Abschaltkriterien als Flussdiagramm dargestellt, das nach dem Start des Programms in einem ersten Entscheidungsblock 41 den Ausgangswert AN des neuronalen Netzes mit dem ersten Abschalt-Schwellwert $ASW_1$ und die Federrate bzw. Drehzahldifferenz mit dem Drehzahldifferenz-Schwellwert SF vergleicht. Ist der Ausgangswert AN größer als der erste Abschalt-Schwellwert $ASW_1$ und die Drehzahldifferenz kleiner als der Drehzahldifferenz-Schwellwert SF, so wird ein Flag 44 gesetzt und einem zweiten Entscheidungsblock 42 zugeführt, während das Programm bei Nichterfüllen der vorstehenden Bedingung direkt zum zweiten Entscheidungsblock 42 übergeht.

In diesem zweiten Entscheidungsblock 42 wird die Bedingung geprüft, ob das Flag 42 gesetzt ist und der Ausgangswert AN des neuronalen Netzes größer als der zweite Abschalt-Schwellwert $ASW_2$ ist. Trifft diese UND-Verknüpfung zu, so erfolgt ein sofortiges Reversieren des Antriebsmotors. Trifft diese Bedingung dagegen nicht zu, so wird in einem dritten Entscheidungsblock 43 geprüft, ob der Ausgangswert AN des neuronalen Netzes größer ist als der erste Abschalt-Schwellwert $ASW_1$ und die Drehzahldifferenz größer als der Drehzahldifferenz-Schwellwert SF. Trifft dies zu, so wird der Antriebsmotor ebenfalls sofort reversiert. Trifft dies nicht zu, so wird erneut zum ersten Entscheidungsblock 41 zurückgesprungen.

Die Verknüpfung der ermittelten Federrate mit dem Ausgangswert des neuronalen Netzes kann entweder mittels eines Fuzzy-Systems oder mittels eines mathematischen Modells mit einem entsprechenden Algorithmus oder ebenfalls mittels eines neuronalen Netzes erfolgen, dem in der Eingangsschicht der der Verstellkraft bzw. dem Verstellmoment entsprechende Ausgangswert des neuronalen Netzes gemäß Fig. 2 und die ermittelte Drehzahldifferenz zugeführt wird und das an seiner Ausgangsschicht einen Wert abgibt, der einem eingeklemmten oder nicht eingeklemmten Zustand entspricht.

Figur 18a zeigt das schematische Blockschaltbild einer ersten Ausführungsform einer Steuerungsvorrichtung mit einem neuronalen Netz für eine Verstelleinrichtung eines Kraftfahrzeugteiles.

Zunächst wird der Aufbau der gezeigten Steuerungsvorrichtung beschrieben. Die Steuerungsvorrichtung umfasst eine Elektronikeinrichtung 1000. Diese weist einen Mi krocontroller 1100, ein Bauelement mit einem neuronalen Netz 1200 und ein Spei cherelement 1300 auf. Der Mikrocontroller 1100 ist sowohl mit dem neuronalen Netz 1200 als auch mit dem Speicherelement 1300 verbunden. Das Speicherelement 1300 wirkt mit dem neuronalen Netz 1200 über eine Leitungsverbindung zusammen.

Sowohl der Mikrocontroller 1100 als auch das neuronale Netz 1200 weisen eine Mehrzahl von Schnittstellen 1400, 1500 auf. Die Schnittstellen 1400 des neuronale Netzes 1200 dienen als Eingänge für die auszuwertenden Messgrößen S'. Diese Schnittstellen 1400 führen die Messgrößen S der Eingangsschicht des neuronalen Netzes 1200 zu. Eine oder mehrere dieser Schnittstellen 1300 können als Anschlüsse an einen CAN- oder LIN-Bussystem des Kraftfahrzeuges ausgebildet sein.

Als Messgrößen S' eignen sich insbesondere die Signale eines Beschleunigungssensors, der die Bewegung des Kraftfahrzeuges oder eines Kraftfahrzeugteiles wie beispielsweise der Tür- oder der Heckklappe charakterisiert. Ausgehend von diesen Beschleunigungssignalen lässt sich beispielsweise das Befahren einer Schlechtwegstrecke oder die Zuschlagbewegung einer Tür bzw. einer Heckklappe eindeutig als Zustand identifizieren. Ebenso ist es vorgesehen, Messgrößen eines der Verstelleinrichtung zugeordneten Motors M' auszuwerten. Die Bewegungscharakteristik von Elektromotoren lässt sich beispielsweise durch Hallsensoren überwachen. Die Auswertung dieser Signale erlaubt Rückschlüsse auf Schwergängigkeiten und Einklemmfälle.

Die Schnittstellen 1500 des Mikrocontrollers 1100 dienen als Eingänge für Signale, aus denen sich die unterschiedlichen Zustände des Kraftfahrzeuges und seiner Bauelemente herauslesen lassen. Dabei kann es sich um die gleichen Messgrößen S oder um eine Teilmenge dieser Messgrößen S' handeln, die über die Schnittstellen 1400 an das neuronale Netz 1200 gelangen.

Über eine Leitungsverbindung steuert der Mikrocontroller 1100 mit Hilfe eines Leistungstreibers H' einen Motor M'. Dieser Motor M' bewegt das der Verstelleinrichtung zugeordnete Kraftfahrzeugteil.

Es ist selbstverständlich, dass der Mikrocontroller 1100, das neuronale Netz 1200 und/oder das Speicherelement 1300 als dargestellte Elemente der Elektronikeinrichtung 1000 auch als bauliche Einheit in Form eines integrierten Schaltkreises ausgebildet sein können. Die Variante der Integration von neuronalem Netz 1200 und Speicherelement 1300 ist als schematische Darstellung einer zweiten Ausführungsform der Steuerungsvorrichtung in Figur 18b gezeigt.

Die übrigen Bauelemente dieser Darstellung entsprechen denen aus Figur 18a, so dass auf die vorangehenden Ausführungen verwiesen wird.

Die technische Umsetzung der Integration eines neuronalen Netzes in einen Mikrocontroller kann zum einen darin bestehen, dass das neuronale Netz im Mikrocontroller als Software realisiert ist. Zum anderen ist ebenso denkbar, dass der Mikrocontroller in Form eines ASIC-Aufbaus (Applied-Specific-Integrated-Circuit) realisiert ist. Selbstverständlich lässt sich das Speicherelement 1300, wie in Figur 18b gezeigt, ebenfalls im Mikrocontroller integrieren. Eine denkbare - nicht dargestellte - Variante besteht darin, dass nur das neuronale Netz 1200 im Mikrocontroller integriert ist, nicht jedoch das Speicherelement, das dann als separates Bauteil der Elektronikeinrichtung realisiert wäre.

Im Folgenden geht es um die Funktionsweise der in den Figuren 18a und 18b dargestellten Steuerungsvorrichtungen. Der Mikrocontroller 1100 erhält über die Schnittstellen 1400, 1500 die Signale des Kraftfahrzeuges und seiner Bauelemente, die ihn über deren jeweiligen Zustand informieren. Im Mikrocontroller 1100 ist die Information abgelegt, bei welchen der ermittelten Zustände das neuronale Netz 1200 mit welchen Sätzen an Gewichten arbeiten sollte. Falls sich also der ermittelte Zustand des Fahrzeugs und seiner Bauelemente so ändert, dass ein anderer Gewichtssatz für das neuronale Netz 1200 erforderlich ist, so initiiert der Mikrocontroller, dass der entsprechende Satz an Gewichten aus dem Speicherelement 1300 für das neuronale Netz 1200 bereitgestellt wird. Das neuronale Netz 1200 arbeitet dann so lange mit dem neuen Satz an Gewichten, bis der Mikrocontroller 1100 wieder eine solche Änderung des Zustands von Kraftfahrzeug und/oder dessen Bauelementen registriert, die einen erneuten Wechsel des Gewichtssatzes für das neuronale Netz erforderlich machen.

Die vorangehend beschriebene Funktionsweise ist unabhängig davon, ob das neuronale Netz 1200 als Software oder als integriertes Hardware-Element in ASIC-Bauweise im Mikrocontroller 1100 integriert ist oder als separates elektronisches Bauelement vorsehen ist.

Das neuronale Netz 1200 realisiert unabhängig von dem gerade aktiven Gewichtssatz einen Einklemmschutz im Hinblick auf Hindernisse, die im Verstellweg des Kraftfahrzeugteiles einklemmen.

Auf diese Weise lässt sich das Steuerungssystem bevorzugt derart ausbilden, dass für bestimmte Zustände, wie z.B. das Befahren einer Schlechtwegstrecke oder das Zuschlagen einer Kraftfahrzeugtür mittels des neuronalen Netzes 1200 der Verstelleinrichtung hauptsächlich ein eingeschränkter Bereich an Federraten des verstellbaren Kraftfahrzeugteiles detektiert wird. Dies lässt sich dadurch erreichen, dass für die übrigen Federraten eine deutlich erhöhte Ansprechschwelle des durch das neuronale Netz 1200 realisierten Einklemmschutzsystems eingesetzt wird.

Dies ist schematisch in Figur 19 dargestellt. Hier ist die Ansprechschwelle A' des Einklemmschutzsystems der Verstelleinrichtung über der Federrate F' aufgetragen.

Ein erster Satz an Gewichten G1' für das neuronale Netz 1200 weist für sämtliche Federraten F' die gleiche Ansprechschwelle auf. Dies soll durch die durchgezogene und anschließend gestrichelt gezeichnete Linie verdeutlicht werden.

Ein zweiter Satz an Gewichten G2' hat ab einer Federrate von in etwa 20 N/mm eine deutlich erhöhte Ansprechschwelle. Dieser Satz G2' würde beispielsweise beim Zustand des Befahrens einer Schlechtwegstrecke oder beim Zuschlagen einer Kraftfahrzeugtür zum Einsatz kommen. Es ist klar, dass der Betrag der Erhöhung der Ansprechschwelle und der Federraten-Schwellwert frei einstellbar sind, was durch die eingezeichneten Pfeile verdeutlicht werden soll.

Weiterhin wird ein Verfahren zur Steuerung einer Verstelleinrichtung eines Kraftfahrzeugteiles mit einer ein neuronales Netz aufweisenden Elektronikeinrichtung beschrieben. Dieses Verfahren umfasst die folgenden Schritte:

- Auswerten von Messgrößen des Kraftfahrzeuges und/oder der Verstelleinrichtung mittels der Elektronikeinrichtung zur Ermittlung eines Zustands des Kraftfahrzeuges und/oder eines Zustands der Verstelleinrichtung;
- abhängig von der Auswertung der Messgrößen und des ermittelten Zustands Auswählen eines Satzes von Gewichten für das neuronale Netz aus einer Mehrzahl von Gewichtssätzen und
- Verwenden des ausgewählten Gewichtssatzes zum Betreiben des neuronalen Netzes während des Steuerns der Verstelleinrichtung des Kraftfahrzeugteils.

Dabei wird das neuronale Netz bevorzugt derart betrieben, dass es einen Einklemmschutzsystem für Hindernisse bereitstellt, die im Verstellweg des Kraftfahrzeugteiles eingeklemmt werden.

Bevorzugt wird ein Mikrocontroller der Elektronikeinrichtung Messgrößen des Kraftfahrzeuges auswerten, um Zustände des Kraftfahrzeuges und/oder von Kraftfahrzeug-Bauelementen zu ermitteln. Abhängig vom ermittelten Zustand wird der Mikrocontroller den diesem Zustand zugeordneten Satz an Gewichten für das neuronale Netz aktivieren.

**Bezugszeichenliste**

| | |
|---|---|
| 1 | Kraftfahrzeugtür |
| 2 | Fensterheber |
| 3 | Antriebsmotor |
| 4 | Schalteinrichtung |
| 5 | Spannungsquelle |
| 6 | Neuronales Netz (Backpropagation-Netzwerk) |
| 7 | Bedienungseinheit |
| 8 | Mikrocomputer |
| 9 | neuronales Adaptionsnetz |
| 10 | Eingangsneuronen |
| 11 | verborgene Neuronen |
| 12 | Ausgangsneuron |
| 14, 15, 16 | gewichtete Verbindungen |
| 21 | Hebeschiene |
| 22 | Fensterscheibe |
| 23 | Hebevorrichtung |
| 30, 31 | Eingangsneuronen des neuronales Adaptionsnetzes |
| 32, 33, 34 | verborgene Neuronen des neuronales Adaptionsnetzes |
| 35 | Ausgangsneuron des neuronales Adaptionsnetzes |
| 36, 37 | gewichtete Verbindungen des neuronales Adaptionsnetzes |
| 60 | Mikroprozessor |
| 61 | Eingangs- oder Eingabeschicht |
| 62, 63 | verborgene Schichten |
| 64 | Ausgangs- oder Ausgabeschicht |
| 91 | Eingangs- oder Eingabeschicht des neuronales Adaptionsnetzes |
| 92, 93 | verborgene Schichten des neuronales Adaptionsnetzes |
| 94 | Ausgangs- oder Ausgabeschicht des neuronales Adaptionsnetzes |
| 101 - 103 | Eingangsneuronen |
| 111, 112 | verborgene Neuronen |
| 1000 | Elektronikeinrichtung |
| 1100 | Mikrocontroller |
| 1200 | Neuronales Netz |
| 1300 | Speichereinheit |
| 1400, 1500 | Schnittstellen |
| A’ | Ansprechschwelle des Einklemmschutzes |
| F’ | Federrate |
| G1’ | Erster Gewichtssatz für das neuronale Netz |
| G2’ | Zweiter Gewichtssatz für das neuronale Netz |
| H’ | Leistungstreiber |

(fortgesetzt)

| | |
|---|---|
| M' | Motoreinrichtung |
| S' | Messgrößen |
| $ASW_1$ $ASW_2$ | Abschalt-Schwellwerte |
| SF | Drehzahldifferenz-Schwellwert |

## Patentansprüche

1. Verfahren zum Überwachen der Verstellbewegung eines von einer Antriebseinrichtung angetriebenen translatorisch oder rotatorisch verstellbaren Bauteils, insbesondere einer Fensterscheibe oder eines Schiebedaches in Kraftfahrzeugen,
**dadurch gekennzeichnet,**
**dass** mehrere aus der Antriebseinrichtung (2, 3) ableitbare Eingangssignale, die eine Verzögerung der Verstellbewegung der Antriebseinrichtung (2, 3) repräsentieren, an Eingangsneuronen (10; 101, 102, 103) einer Eingangsschicht (61) eines neuronalen Netzes (6) mit mindestens einer verborgene Neuronen (11; 111, 112) aufweisenden verborgenen Schicht (62, 63) eingegeben werden, das an mindestens einem Ausgangsneuron (12) einer Ausgangsschicht (64) einen der Verstellkraft oder einen eingeklemmten oder nicht eingeklemmten Zustand entsprechenden Ausgangswert abgibt.

2. Verfahren nach Anspruch 1, **dadurch gekennzeichnet, dass** die aus der Antriebseinrichtung (2, 3) ableitbaren Eingangssignale indirekt eine Verzögerung der Verstellbewegung der Antriebseinrichtung (2, 3) repräsentieren.

3. Verfahren nach Anspruch 1 oder 2, **dadurch gekennzeichnet, dass** eine Verzögerung der Verstellbewegung der Antriebseinrichtung (2, 3) durch eine Veränderung der Periodendauer und/oder des Motorstroms und/oder der Motorspannung eines Antriebsmotors (3) der Antriebseinrichtung (2, 3) ermittelt wird.

4. Verfahren nach mindestens einem der voranstehenden Ansprüche, **dadurch gekennzeichnet, dass** die aus der Antriebseinrichtung (2, 3) ableitbaren Eingangssignale parallel oder seriell an die Eingangsneuronen (10; 101, 102, 103) der Eingangsschicht (61) des neuronalen Netzes (6) abgegeben werden.

5. Verfahren nach mindestens einem der voranstehenden Ansprüche, **dadurch gekennzeichnet, dass** die Eingänge der Eingangsschicht (61), der verborgenen Schicht (62, 63) und der Ausgangsschicht (64) sowie die Verbindungen (14) der Eingangsschicht (91) mit der mindestens einen verborgenen Schicht (62), die Verbindungen (15) der mehreren verborgenen Schichten (62, 63) untereinander und die Verbindungen (16) einer verborgenen Schicht (63) mit der Ausgangsschicht (64) unterschiedlich stark gewichtet werden.

6. Verfahren nach mindestens einem der voranstehenden Ansprüche, **dadurch gekennzeichnet, dass** die verborgenen Neuronen (11; 111, 112) der mindestens einen verborgenen Schicht (62, 63) und das mindestens eine Ausgangsneuron (12) der Ausgangsschicht (64) einen konstanten Schwellwert oder Bias besitzt, der den Ausgang der Transferfunktionen der Neuronen (10, 11, 12; 101, 102, 103; 111, 112) in einen stetigen Bereich verschiebt.

7. Verfahren nach mindestens einem der voranstehenden Ansprüche, **dadurch gekennzeichnet, dass** an die Eingangsneuronen (10; 101, 102, 103), verborgenen Neuronen (11; 111, 112) und/oder Ausgangsneuronen (12) des neuronalen Netzes (6) in einer Lernphase

    - zufällige Gewichte vergeben werden,
    - verschiedene an die Eingangsneuronen (10; 101, 102, 103) angelegte Eingangsmuster vorgegeben und der dazugehörige mindestens eine Ausgangswert berechnet wird und
    - in Abhängigkeit vom Unterschied zwischen dem mindestens einen Ausgangswert und mindestens einem Soll-Ausgangswert die Gewichte und/oder der Schwellwert verändert werden.

8. Verfahren nach Anspruch 7, **dadurch gekennzeichnet, dass** das Maß der Änderung der Gewichte von der Größe des Unterschieds zwischen dem mindestens einen Ausgangswert und dem mindestens einen Soll-Ausgangswert abhängt.

**9.** Verfahren nach Anspruch 7 oder 8, **dadurch gekennzeichnet, dass** der Ausgangswert mit einer Kraftmesszange bei unterschiedlichen Federraten, insbesondere bei 2 N/mm und 20 N/mm, gemessen wird, und dass die Kraftmesszange analog zu den Eingangswerten den gemessenen Ausgangswert ausgibt.

**10.** Verfahren nach mindestens einem der voranstehenden Ansprüche, **dadurch gekennzeichnet, dass** den Eingangsneuronen (10; 101, 102, 103) als Eingangssignale die Motorperiode, der Motorstrom und/oder die Motorspannung des Antriebsmotors (3) eingegeben werden.

**11.** Verfahren nach einem der voranstehenden Ansprüche, **dadurch gekennzeichnet, dass** den Eingangsneuronen (10; 101, 102, 103) als zusätzliches Eingangssignal eine Adaptionsperiode eingegeben wird, die die bei einer vorgegebenen Referenzspannung berechnete Periode angibt, die zur Position einer in der Lernphase abgelegten Referenzwegstrecke gehört.

**12.** Verfahren nach Anspruch 11, **dadurch gekennzeichnet, dass** die Adaptionsperiode gemittelt wird, indem bei jeder vollen Umdrehung oder in vier Viertelperioden des Antriebsmotors das neuronale Netz eine neue Adaptionsperiode errechnet, die bei der nächsten Verstellbewegung als Adaptionsperiode zur Verfügung gestellt wird.

**13.** Verfahren nach mindestens einem der voranstehenden Ansprüche, **dadurch gekennzeichnet, dass** die Eingangswerte der Eingangsneuronen (10; 101, 102, 103) aus

- den Werten eines Adaptionsanlaufs des translatorisch verstellbaren Baute ils,
- den Werten einer Adaptionsperiode beim Verstellen des translatorisch verstellbaren Bauteils
- einem Anlaufflag,
- den Ausgangswerten eines Schieberegisters für Klemmenspannungen des Antriebsmotors,
- den Ausgangswerten eines Schieberegisters für Periodenwerte,
- der Temperatur des Antriebsmotors,
- der Umgebungstemperatur
- einem Geschwindigkeitssignal,
- einem Schwingflag und
- einem vorangegangenen Ausgangswert

bestehen und als Ausgangswert eines Ausgangsneurons die neuronal ermittelte Kraft abgegeben wird.

**14.** Verfahren nach mindestens einem der voranstehenden Ansprüche, **dadurch gekennzeichnet, dass** in der Lernphase des neuronalen Netzes (6) an die Eingangsneuronen (10; 101, 102, 103) angelegte Eingangsmuster und die von dem mindestens einen Ausgangsneuron (12) abgegebenen Kraftwerte in Abhängigkeit von der gewünschten Empfindlichkeit des Systems bei niedrigen Federraten ausgewählt bzw. vorgegeben werden.

**15.** Verfahren nach Anspruch 14, **dadurch gekennzeichnet, dass** der Lernanteil in der Lernphase des neuronalen Netzes (6) aus der Adaptionsperiode besteht, die nach jedem Lauf neu in der Anwendung ermittelt wird.

**16.** Verfahren nach Anspruch 14 oder 15, **dadurch gekennzeichnet, dass** die Lernphase vor der betriebsgemäßen Anwendung in einem Fahrzeug erfolgt.

**17.** Verfahren nach Anspruch 16, **dadurch gekennzeichnet, dass** bei der betriebsgemäßen Anwendung die in der Lernphase ermittelten Gewichte des neuronalen Netzes (6) festgelegt werden.

**18.** Verfahren nach mindestens einem der voranstehenden Ansprüche, **gekennzeichnet durch** eine Adaptionseinrichtung (9) zur Ermittlung von auf einen Referenzwert normierten Signalen der Antriebseinrichtung (2, 3) und Abgabe von Adaptionswerten an die Eingangsschicht (61) des neuronalen Netzes (6).

**19.** Verfahren nach Anspruch 18, **dadurch gekennzeichnet, dass** die Adaptionseinrichtung (9) die Adaptionswerte positionsabhängig an die Eingangsneuronen (10) des neuronalen Netzes (6) als zusätzliches Eingangssignal abgibt.

**20.** Verfahren nach Anspruch 18 oder 19, **dadurch gekennzeichnet, dass** die Adaptionseinrichtung aus einem neuronalen Adaptionsnetz (9) besteht, dessen Eingangsneuronen (30, 31) mit mindestens einem Signal der Antriebseinrichtung (2, 3) beaufschlagt sind und dessen mindestens ein Ausgangsneuron (35) die positionsabhängigen Adaptionswerte an das neuronale Netz (6) abgibt.

**21.** Verfahren nach Anspruch 20, **dadurch gekennzeichnet, dass** die Eingangsneuronen (30, 31) des neuronalen Adaptionsnetzes (9) mit Zusatzparametern wie der Umgebungstemperatur, Klimadaten oder der Temperatur und des Abkühlverhaltens des Antriebsmotors (3) der Antriebseinrichtung (2, 3) beaufschlagt sind.

**22.** Verfahren nach Anspruch 11 oder 12, **dadurch gekennzeichnet, dass** die Adaptionseinrichtung ein Modell der Antriebseinrichtung, ein Fuzzy-System oder ein mathematischen Modell mit einem genetisch generierten Algorithmus aufweist.

**23.** Verfahren nach mindestens einem der voranstehenden Ansprüche, **dadurch gekennzeichnet, dass** der Antriebsmotor (3) in Abhängigkeit vom Ausgangswert des neuronalen Netzes (6) und der Federrate angehalten oder reversiert wird.

**24.** Verfahren nach Anspruch 23, **dadurch gekennzeichnet, dass** die Verknüpfung der Federrate der Antriebseinrichtung (2, 3) mit dem Ausgangswert des neuronalen Netzes (6) mittels einer Logikschaltung, eines mathematischen Modells mit einem Algorithmus oder eines neuronalen Verknüpfungsnetzes erfolgt.

**25.** Verfahren nach Anspruch 23 oder 24, **dadurch gekennzeichnet, dass** die Drehzahl des Antriebsmotors (3) erfasst, die Drehzahldifferenz zwischen zwei Perioden gebildet und mit dem Ausgangswert des neuronalen Netzes (6) derart verknüpft wird, dass

- beim Überschreiten eines ersten Abschalt-Schwellwertes ($ASW_1$) des Ausgangswertes des neuronalen Netzes (6) und einer Drehzahldifferenz, die kleiner ist als ein vorgegebener Drehzahldifferenz-Schwellwert (SF), der Antriebsmotor (3) bis zum Ende der Verstellbewegung nur dann angehalten oder reversiert wird, wenn der Ausgangswert des neuronalen Netzes (6) einen zweiten Abschalt-Schwellwert ($ASW_2$) überschreitet, der größer ist als der erste Abschalt-Schwellwert ($ASW_1$),
- beim Überschreiten eines ersten Abschalt-Schwellwertes ($ASW_1$) des Ausgangswertes des neuronalen Netzes und einer Drehzahldifferenz, die größer ist als ein vorgegebener Drehzahldifferenz-Schwellwert (SF) der Antriebsmotor (3) angehalten oder reversiert wird,
- beim Überschreiten des zweiten Abschalt-Schwellwertes ($ASW_2$) unabhängig von der Drehzahldifferenz der Antriebsmotor (3) angehalten oder reversiert wird.

**26.** Verfahren nach Anspruch 25, **dadurch gekennzeichnet, dass** beim Überschreiten des ersten Abschalt-Schwellwertes ($ASW_1$) des Ausgangswertes des neuronalen Netzes (6) und einer Drehzahldifferenz, die kleiner ist als der vorgegebene Drehzahldifferenz-Schwellwert (SF), ein Anhalten oder Reversieren des Antriebsmotors (3) auch dann blockiert wird, wenn die Drehzahldifferenz bei der weiteren Verstellbewegung der Antriebseinrichtung (2, 3) größer ist als der vorgegebene Drehzahldifferenz-Schwellwert (SF).

**27.** Verfahren nach mindestens einem der vorangehenden Merkmale mit den folgenden Schritten:

- Auswerten der Eingangssignale mittels des neuronalen Netzes zur Ermittlung eines Zustands des Kraftfahrzeuges und/oder eines Zustands der Verstelleinrichtung;
- abhängig von der Auswertung der Eingangssignale und des ermittelten Zustands Auswählen eines Satzes von Gewichten für das neuronale Netz aus einer Mehrzahl von Gewichtssätzen und
- Verwenden des ausgewählten Gewichtssatzes zum Betreiben des neuronalen Netzes während des Steuerns der Antriebseinrichtung des verstellbaren Bauteils.

## Claims

**1.** A method for monitoring the adjustment movement of a component, in particular a window pane or a sunroof in motor vehicles, which is driven by a drive device and can be adjusted in a translatory or rotary fashion, **characterized in that** a plurality of input signals which can be derived from the drive device (2, 3) and which represent a deceleration of the adjustment movement of the drive device (2, 3) are input at input neurons (10; 101, 102, 103) of an input layer (61) of a neural network (6) with at least one hidden layer (62, 63) having hidden neurons (11; 111, 112), said network (6) outputting, at at least one output neuron (12) of an output layer (64), an output value which corresponds to the adjusting force or to a trapped state or nontrapped state.

**2.** The method as claimed in claim 1, **characterized in that** the input signals which can be derived from the drive device (2, 3) indirectly represent deceleration of the adjustment movement of the drive device (2, 3).

3. The method as claimed in claim 1 or 2, **characterized in that** deceleration of the adjustment movement of the drive device (2, 3) is determined by changing the period length and/or the motor current and/or the motor voltage of a drive motor (3) of the drive device (2, 3).

4. The method as claimed in at least one of the preceding claims, **characterized in that** the input signals which can be derived from the drive device (2, 3) are output in parallel or in series to the input neurons (10; 101, 102, 103) of the input layer (61) of the neural network (6).

5. The method as claimed in at least one of the preceding claims, **characterized in that** the inputs of the input layer (61), of the hidden layer (62, 63) and of the output layer (64) as well as the connections (14) of the input layer (91) to the at least one hidden layer (62), the connections (15) of the plurality of hidden layers (62, 63) to one another and the connections (16) of a hidden layer (63) to the output layer (64) have differing weightings.

6. The method as claimed in at least one of the preceding claims, **characterized in that** the hidden neurons (11; 111, 112) of the at least one hidden layer (62, 63) and the at least one output neuron (12) of the output layer (64) have a constant threshold value or bias which shifts the output of the transfer functions of the neurons (10, 11, 12; 101, 102, 103; 111, 112) into a constant region.

7. The method as claimed in at least one of the preceding claims, **characterized in that** at the input neurons (10; 101, 102, 103), hidden neurons (11; 111, 112) and/or output neurons (12) of the neural network (6), in a learning phase,

   - random weightings are assigned,
   - various input patterns which are applied to the input neurons (10; 101, 102, 103) are predefined, and the associated at least one output value is calculated, and
   - the weightings and/or the threshold value are changed as a function of the difference between the at least one output value and at least one setpoint output value.

8. The method as claimed in claim 7, **characterized in that** the degree of change in the weightings depends on the size of the difference between the at least one output value and the at least one setpoint output value.

9. The method as claimed in claim 7 or 8, **characterized in that** the output value is measured with a clip-on force measuring instrument at different spring constants or in particular at 2 N/mm and 20 N/mm, and **in that** the clip-on force measuring instrument outputs the measured output value in a way which is analogous to the input values.

10. The method as claimed in at least one of the preceding claims, **characterized in that** the motor period, the motor current and/or the motor voltage of the drive motor (3) are input into the input neurons (10; 101, 102, 103) as input signals.

11. The method as claimed in one of the preceding claims, **characterized in that** an adaptation period which specifies the period calculated at a predefined reference voltage and which is associated with the position of a reference distance stored in the learning phase is input into the input neurons (10; 101, 102, 103) as an additional input signal.

12. The method as claimed in claim 11, **characterized in that** the adaptation period is averaged **in that** the neural network calculates a new adaptation period at each full rotation of the drive motor or in four quarter periods of the drive motor, said new adaptation period being made available at the next adjustment movement as an adaptation period.

13. The method as claimed in at least one of the preceding claims, **characterized in that** the input values of the input neurons (10; 101, 102, 103) are composed of

   - the values of an adaptation profile of the component which can be adjusted in a translatory fashion,
   - the values of an adaptation period when the component which can be adjusted in a translatory fashion is adjusted,
   - a run up flag,
   - the output values of a shift register for terminal voltages of the drive motor,
   - the output values of a shift register for period values,

- the temperature of the drive motor,
- the ambient temperature,
- a speed signal
- an oscillation voltage, and
- a preceding output value,

and the force which is determined by neural means is output as an output value of an output neuron.

**14.** The method as claimed in at least one of the preceding claims, **characterized in that**, in the learning phase of the neural network (6), input patterns which are applied to the input neurons (10; 101, 102, 103) and the force values which are output by the at least one output neuron (12) are selected and/or predefined as a function of the desired sensitivity of the system at low spring constants.

**15.** The method as claimed in claim 14, **characterized in that** the learning component in the learning phase of the neural network (6) is composed of the adaptation period which is determined anew in the application after each pass.

**16.** The method as claimed in claim 14 or 15, **characterized in that** the learning phase takes place in a vehicle before the operational application.

**17.** The method as claimed in claim 16, **characterized in that** the weightings of the neural network (6) which are determined in the learning phase are defined during the operational application.

**18.** The method as claimed in at least one of the preceding claims, **characterized by** an adaptation device (9) for determining signals of the drive device (2, 3) which are standardized to a reference value, and for outputting adaptation values to the input layer (61) of the neural network (6).

**19.** The method as claimed in claim 18, **characterized in that** the adaptation device (9) outputs the adaptation values to the input neurons (10) of the neural network (6) as an additional input signal as a function of the position.

**20.** The method as claimed in claim 18 or 19, **characterized in that** the adaptation device is composed of a neural adaptation network (9) to whose input neurons (30, 31) at least one signal of the drive device (2, 3) is applied and whose at least one output neuron (35) outputs the position-dependent adaptation values to the neural network (6).

**21.** The method as claimed in claim 20, **characterized in that** additional parameters such as the ambient temperature, climatic data or the temperature and the cooling behavior of the drive motor (3) of the drive device (2, 3) are applied to the input neurons (30, 31) of the neural adaptation network (9).

**22.** The method as claimed in claim 11 or 12, **characterized in that** the adaptation device has a model of the drive device, a fuzzy system or a mathematical model with a genetically generated algorithm.

**23.** The method as claimed in at least one of the preceding claims, **characterized in that** the drive motor (3) is stopped or reversed as a function of the output value of the neural network (6) and the spring constant.

**24.** The method as claimed in claim 23, **characterized in that** the logic combination of the spring constant of the drive device (2, 3) with the output value of the neural network (6) is carried out by means of a logic circuit, a mathematical model with an algorithm or a neural logic network.

**25.** The method as claimed in claim 23 or 24, **characterized in that** the rotation speed of the drive motor (3) is sensed, and the difference in rotational speed between two periods is formed and logically combined with the output value of the neural network (6) in such a way that

- when a first switch-off threshold value ($ASW_1$) of the output value of the neural network (6) and a difference in rotational speed which is smaller than a predefined threshold value (SF) for the difference in rotational speed is exceeded, the drive motor (3) is stopped or reversed up to the end of the adjustment movement only if the output value of the neural network (6) exceeds a second switch-off threshold value ($ASW_2$) which is greater than the first switch-off threshold value ($ASW_1$),
- when a first switch-off threshold value ($ASW_1$) of the output value of the neural network and a difference in rotational speed which is greater than a predefined threshold value (SF) for the difference in rotational speed are exceeded, the drive motor (3) is stopped or reversed,

- when the second switch-off threshold value ($ASW_2$) is exceeded the drive motor (3) is stopped or reversed irrespective of the difference in rotational speed.

**26.** The method as claimed in claim 25, **characterized in that** when the first switch-off threshold value ($ASW_1$) of the output value of the neural network (6) and a difference in rotational speed which is smaller than the predefined threshold value (SF) for the difference in rotational speed are exceeded, stopping or reversing of the drive motor (3) are blocked even if the difference in rotational speed ensuring the further adjustment movement of the drive device (2, 3) is greater than the predefined threshold value (SF) for the difference in rotational speed.

**27.** The method as per at least one of the preceding features having the following steps:

• evaluation of the input signals by means of the neural network in order to determine a state of the motor vehicle and/or a state of the adjustment device;
• selection of a set of weightings for the neural network from a multiplicity of sets of weightings irrespective of the evaluation of the input signals and the determined state, and
• use of the selected set of weightings to operate the neural network while the drive device of the adjustable component is being controlled.

## Revendications

**1.** Procédé pour surveiller le mouvement de déplacement d'un composant, déplaçable de manière translatoire ou rotatoire, entraîné par un dispositif d'entraînement, en particulier une vitre de fenêtre ou un toit ouvrant dans des véhicules automobiles, **caractérisé en ce que**
plusieurs signaux d'entrée, dérivables du dispositif d'entraînement (2, 3) et représentant un ralentissement du mouvement de déplacement du dispositif d'entraînement (2, 3), sont entrés dans des neurones d'entrée (10 ; 101, 102, 103) d'une couche d'entrée (61) d'un réseau de neurones (6) qui a au moins une couche cachée (62, 63) comportant des neurones cachés (11 ; 111, 112) et qui délivre à au moins un neurone de sortie (12) d'une couche de sortie (64) une valeur de sortie correspondant à la force de déplacement ou à un état coincé ou à un état non coincé.

**2.** Procédé selon la revendication 1, **caractérisé en ce que** les signaux d'entrée dérivables du dispositif d'entraînement (2, 3) représentent indirectement un ralentissement du mouvement de déplacement du dispositif d'entraînement (2, 3).

**3.** Procédé selon la revendication 1 ou 2, **caractérisé en ce qu'**un ralentissement du mouvement de déplacement du dispositif d'entraînement (2, 3) est déterminé par une variation de la durée de la période et/ou du courant et/ou de la tension d'un moteur d'entraînement (3) du dispositif d'entraînement (2, 3).

**4.** Procédé selon l'une quelconque des revendications précédentes, **caractérisé en ce que** les signaux d'entrée dérivables du dispositif d'entraînement (2, 3) sont délivrés en parallèle ou en série aux neurones d'entrée (10; 101, 102, 103) de la couche d'entrée (61) du réseau de neurones (6).

**5.** Procédé selon l'une quelconque des revendications précédentes, **caractérisé en ce que** les entrées de la couche d'entrée (61), de la couche cachée (62, 63) et de la couche de sortie (64) ainsi que les liaisons (14) de la couche d'entrée (91) avec la ou les couches cachées (62), les liaisons (15) des plusieurs couches cachées (62, 63) entre elles et les liaisons (16) d'une couche cachée (63) avec la couche de sortie (64) sont pondérées d'une manière très différente.

**6.** Procédé selon l'une quelconque des revendications précédentes, **caractérisé en ce que** les neurones cachés (11 ; 111, 112) de la ou des couches cachées (62, 63) et le ou les neurones de sortie (12) de la couche de sortie (64) possèdent une polarisation ou une valeur de seuil constante, qui décale la sortie des fonctions de transfert des neurones (10, 11, 12 ; 101, 102, 103 ; 111, 112) dans une zone continue.

**7.** Procédé selon l'une quelconque des revendications précédentes, **caractérisé en ce que** les neurones d'entrée (10 ; 101, 102, 103), les neurones cachés (11 ; 111, 112) et/ou les neurones de sortie (12) du réseau de neurones (6) dans une phase d'apprentissage

- se voient attribuer des poids aléatoires,

- différents motifs d'entrée appliqués aux neurones d'entrée (10 ; 101, 102, 103) sont prédéfinis et la ou les valeurs de sortie correspondantes sont calculées et
- en fonction de la différence entre la ou les valeurs de sortie et au moins une valeur de sortie de consigne, les poids et/ou la valeur de seuil sont modifiés.

**8.** Procédé selon la revendication 7, **caractérisé en ce que** la grandeur de la modification des poids dépend de l'ampleur de la différence entre la ou les valeurs de sortie et la ou les valeurs de sortie de consigne.

**9.** Procédé selon la revendication 7 ou 8, **caractérisé en ce que** la valeur de sortie est mesurée avec une pince dynamométrique avec différentes flexibilités de ressort, en particulier avec 2 N/mm et 20 N/mm, et **en ce que** la pince dynamométrique délivre en sortie la valeur de sortie mesurée de manière analogue aux valeurs d'entrée.

**10.** Procédé selon l'une quelconque des revendications précédentes, **caractérisé en ce que** la période, le courant moteur et/ou la tension du moteur d'entraînement (3) sont fournis aux neurones d'entrée (10 ; 101, 102, 103) en tant que signaux d'entrée.

**11.** Procédé selon l'une quelconque des revendications précédentes **caractérisé en ce que** les neurones d'entrée (10 ; 101, 102, 103) se voient fournir en tant que signal d'entrée supplémentaire une période d'adaptation qui indique la période calculée avec une tension de référence prédéfinie, qui correspond à la position d'une distance de référence enregistrée durant la phase d'apprentissage.

**12.** Procédé selon la revendication 11, **caractérisé en ce que** l'on calcule la période d'adaptation moyenne par le fait que, à chaque tour complet ou tous les quatre quarts de période du moteur d'entraînement, le réseau de neurones calcule une nouvelle période d'adaptation qui est mise à disposition en tant que période d'adaptation lors du prochain mouvement de déplacement.

**13.** Procédé selon l'une quelconque des revendications précédentes, **caractérisé en ce que** des valeurs d'entrée des neurones d'entrée (10 ; 101, 102, 103) comprennent :

- des valeurs d'un démarrage d'adaptation du composant déplaçable de manière translatoire,
- des valeurs d'une période d'adaptation en cas de déplacement du composant déplaçable de manière translatoire
- d'un drapeau de démarrage,
- des valeurs de sortie d'un registre à décalage pour des tensions de blocage du moteur d'entraînement,
- des valeurs de sortie d'un registre à décalage pour des valeurs de période,
- de la température du moteur d'entraînement,
- de la température ambiante
- d'un signal de vitesse,
- d'un drapeau d'oscillation et
- d'une valeur de sortie précédente

et **en ce que** la force déterminée de manière neuronale est délivrée en tant que valeur de sortie d'un neurone de sortie.

**14.** Procédé selon l'une quelconque des revendications précédentes, **caractérisé en ce que**, au cours de la phase d'apprentissage du réseau de neurones (6), des motifs d'entrée appliquées aux neurones d'entrée (10 ; 101. 102, 103) et les valeurs de force délivrées par le ou les neurones de sortie (12) sont sélectionnés respectivement prédéfinis en fonction de la sensibilité souhaitée du système en cas de faibles flexibilités de ressort.

**15.** Procédé selon la revendication 14, **caractérisé en ce que** la partie d'apprentissage au cours de la phase d'apprentissage du réseau de neurones (6) se compose de la période d'adaptation qui est déterminée de nouveau dans l'application après chaque passage.

**16.** Procédé selon la revendication 14 ou 15, **caractérisé en ce que** la phase d'apprentissage est effectuée avant l'application conforme au fonctionnement dans un véhicule.

**17.** Procédé selon la revendication 16, **caractérisé en ce que** les poids du réseau de neurones (6) déterminés au cours de la phase d'apprentissage sont définis lors de l'application conforme au fonctionnement.

**18.** Procédé selon l'une quelconque des revendications précédentes, **caractérisé par** un dispositif d'adaptation (9) permettant de déterminer des signaux du dispositif d'entraînement (2, 3) normalisés par rapport à une valeur de référence et de délivrer des valeurs d'adaptation à la couche d'entrée (61) du réseau de neurones (6).

**19.** Procédé selon la revendication 18, **caractérisé en ce que** le dispositif d'adaptation (9) délivre aux neurones d'entrée (10) du réseau de neurones (6) les valeurs d'adaptation en fonction de la position en tant que signal d'entrée supplémentaire.

**20.** Procédé selon la revendication 18 ou 19, **caractérisé en ce que** le dispositif d'adaptation se compose d'un réseau d'adaptation neuronal (9) dont les neurones d'entrée (30, 31) reçoivent au moins un signal du dispositif d'entraînement (2, 3) et dont au moins neurone de sortie (35) délivre au réseau de neurones (6) les valeurs d'adaptation dépendantes de la position.

**21.** Procédé selon la revendication 20, **caractérisé en ce que** les neurones d'entrée (30, 31) du réseau d'adaptation neuronal (9) reçoivent des paramètres supplémentaires tels que la température ambiante, des adonnées climatiques ou la température, et le comportement de refroidissement du moteur d'entraînement (3) du dispositif d'entraînement (2, 3).

**22.** Procédé selon la revendication 11 ou 12, **caractérisé en ce que** le dispositif d'adaptation comporte un modèle du dispositif d'entraînement, un système flou ou un modèle mathématique ayant un algorithme généré de manière génétique.

**23.** Procédé selon l'une quelconque des revendications précédentes, **caractérisé en ce que** le moteur d'entraînement (3) est arrêté ou sa rotation inversée en fonction de la valeur de sortie du réseau de neurones (6) et des flexibilités de ressort.

**24.** Procédé selon la revendication 23, **caractérisé en ce que** la combinaison des flexibilités de ressort du dispositif d'entraînement (2, 3) avec la valeur de sortie du réseau de neurones (6) est effectuée au moyen d'un circuit logique, d'un modèle mathématique ayant un algorithme ou d'un réseau de combinaisons neuronales.

**25.** Procédé selon la revendication 23 ou 24, **caractérisé en ce que** la vitesse de rotation du moteur d'entraînement (3) est détectée, la différence de vitesse de rotation entre deux périodes est formée et est combinée avec la valeur de sortie du réseau de neurones (6) de manière telle que

- en cas de dépassement d'une première valeur de seuil de coupure (ASW1) de la valeur de sortie du réseau de neurones (6) et d'une différence de vitesse de rotation, qui est inférieure à une valeur de seuil de différence de vitesse de rotation (SF), le moteur d'entraînement (3) soit alors arrêté ou sa rotation inversée jusqu'à la fin du mouvement de déplacement uniquement lorsque la valeur de sortie du réseau de neurones (6) dépasse une deuxième valeur de seuil de coupure (ASW2) qui est supérieure à la première valeur de seuil de coupure (ASW1),
- en cas de dépassement d'une première valeur de seuil de coupure (ASW1) de la valeur de sortie du réseau de neurones et d'une différence de vitesse de rotation, qui est supérieure à une valeur de seuil de différence de vitesse de rotation prédéfinie (SF), le moteur d'entraînement (3) soit arrêté ou sa rotation inversée,
- en cas de dépassement de la deuxième valeur de seuil de coupure (ASW2) indépendamment de la différence de vitesse de rotation, le moteur d'entraînement (3) soit arrêté ou sa rotation inversée.

**26.** Procédé selon la revendication 25, **caractérisé en ce que**, en cas de dépassement de la première valeur de seuil de coupure (ASW1) de la valeur de sortie du réseau de neurones (6) et d'une différence de vitesse de rotation, qui est inférieure à la valeur de seuil de différence de vitesse de rotation prédéfinie (SF), un arrêt ou une inversion du sens de marche du moteur d'entraînement (3) est également bloqué si, lors du prochain mouvement de déplacement du dispositif d'entraînement (2, 3), la différence de vitesse de rotation est supérieure à la valeur de seuil de différence de vitesse de rotation prédéfinie (SF).

**27.** Procédé selon l'une quelconque des revendications précédentes comprenant les étapes suivantes consistant à :

• évaluer des signaux d'entrée au moyen du réseau de neurones afin de déterminer un état du véhicule automobile et/ou un état du dispositif de déplacement ;
• en fonction de l'évaluation des signaux d'entrée et de l'état déterminé sélectionner un ensemble de poids pour le réseau de neurones à partir d'une pluralité d'ensembles de poids et

• employer l'ensemble de poids sélectionné pour faire fonctionner le réseau de neurones pendant la commande du dispositif d'entraînement du composant déplaçable.

FIG 1

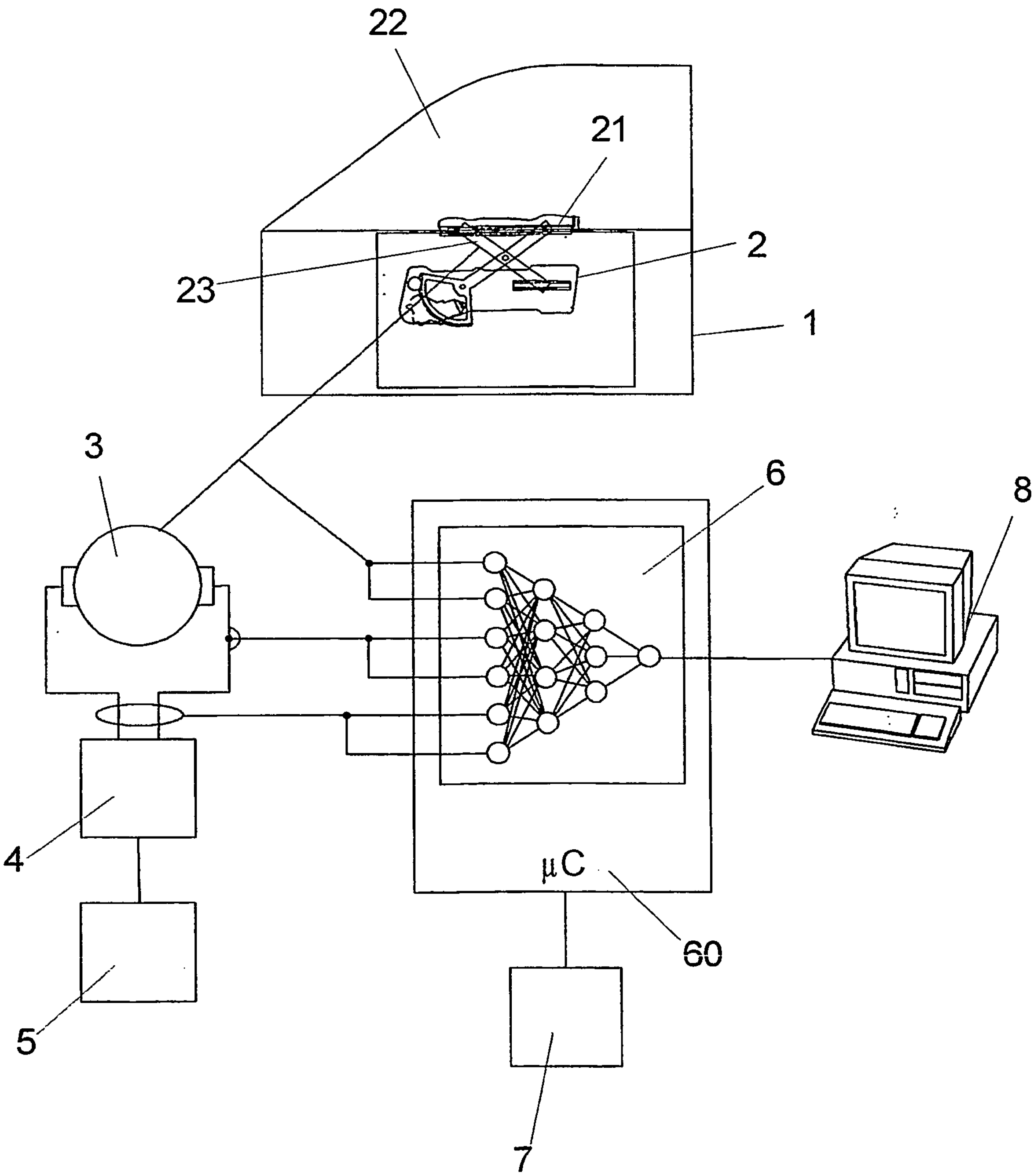

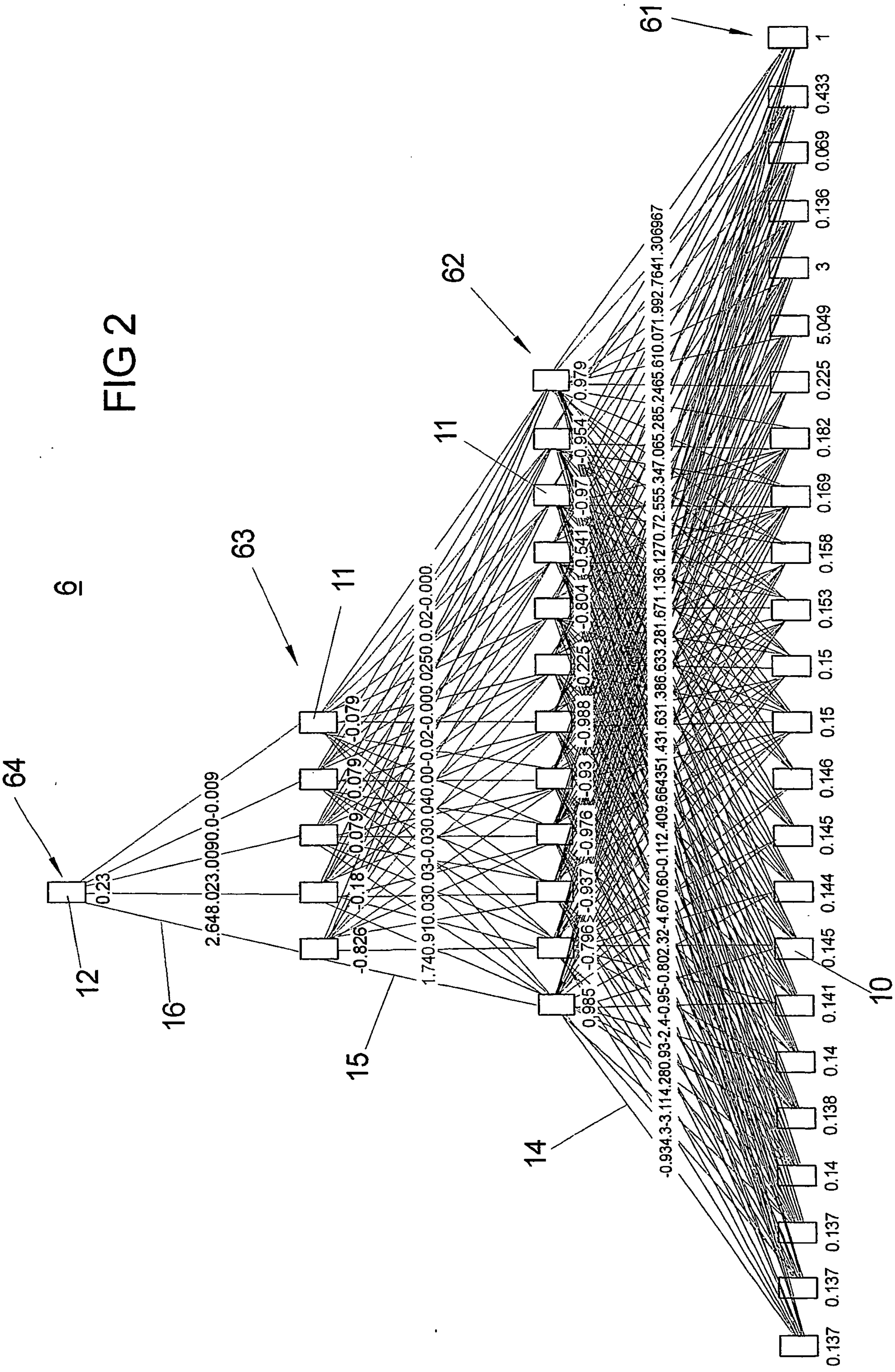
6
61
62
63
64
10
11
11
12
14
15
16
1
0.433
0.069
0.136
3
5.049
0.225
0.182
0.169
0.158
0.153
0.15
0.15
0.146
0.145
0.144
0.145
0.141
0.14
0.138
0.14
0.137
0.137
0.137
0.23
-0.826
-0.18
-0.079
0.079
-0.079
0.979
-0.954
-0.97
-0.541
-0.804
-0.225
-0.988
-0.93
-0.976
-0.937
-0.796
0.985
2.648.023.0090.0-0.009
1.740.910.030.03-0.030.040.00-0.02-0.000.0250.0.02-0.000.

FIG 2

FIG 3

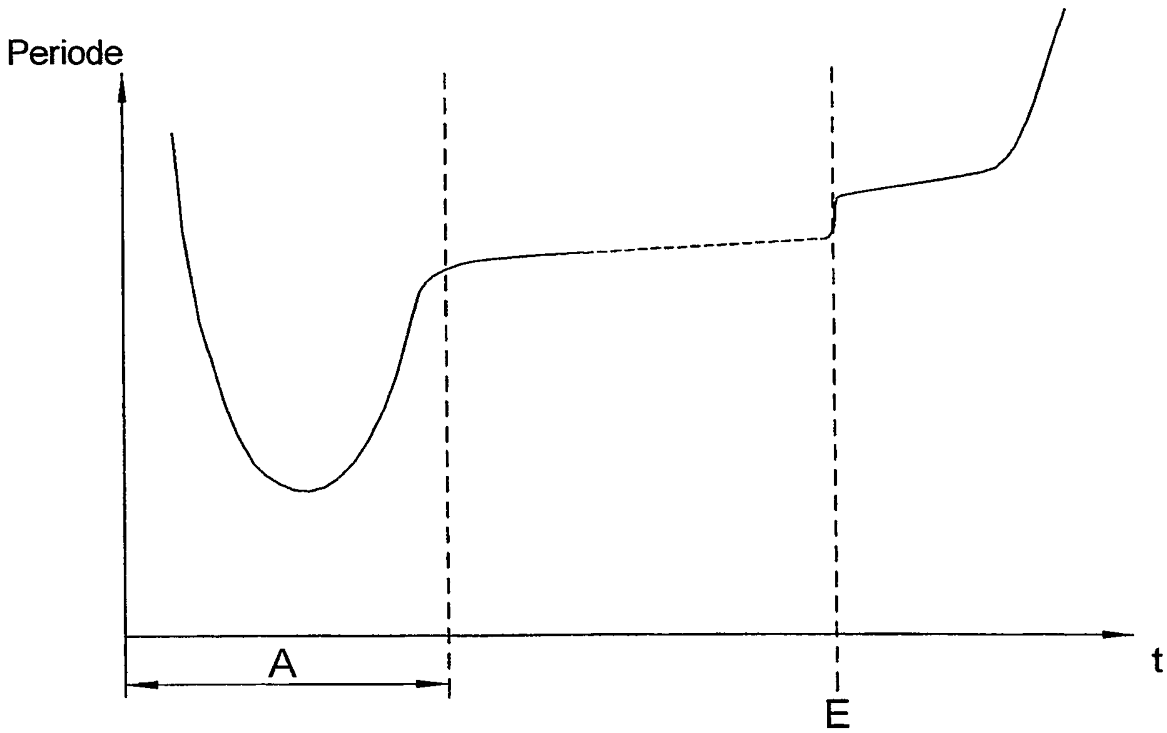

FIG 4A

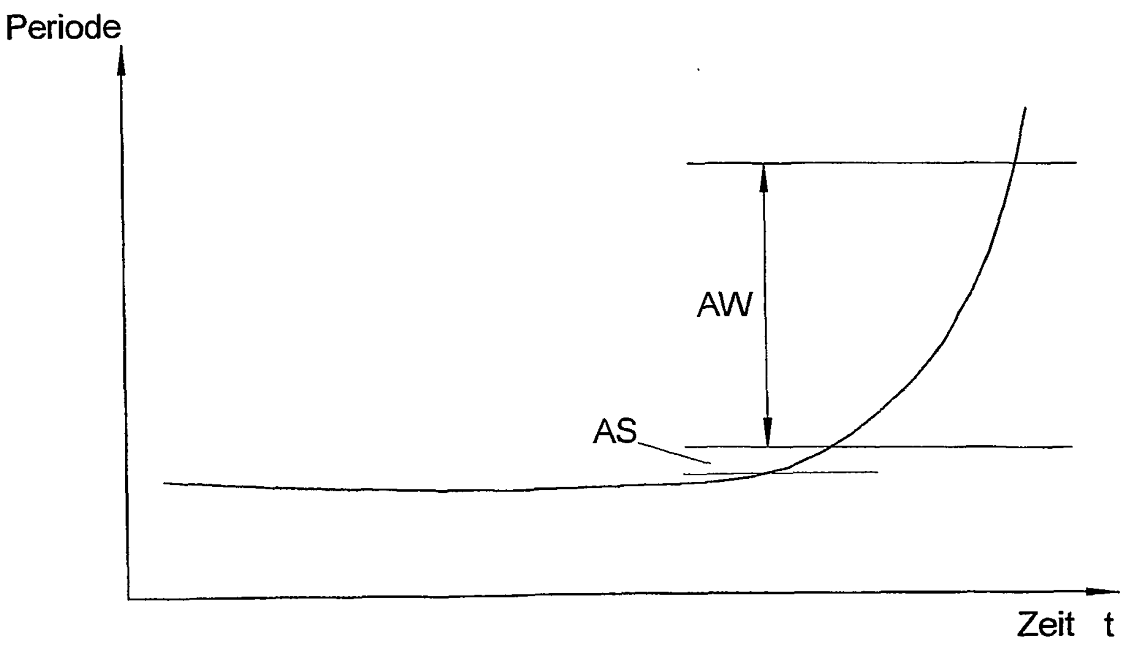

FIG 4B

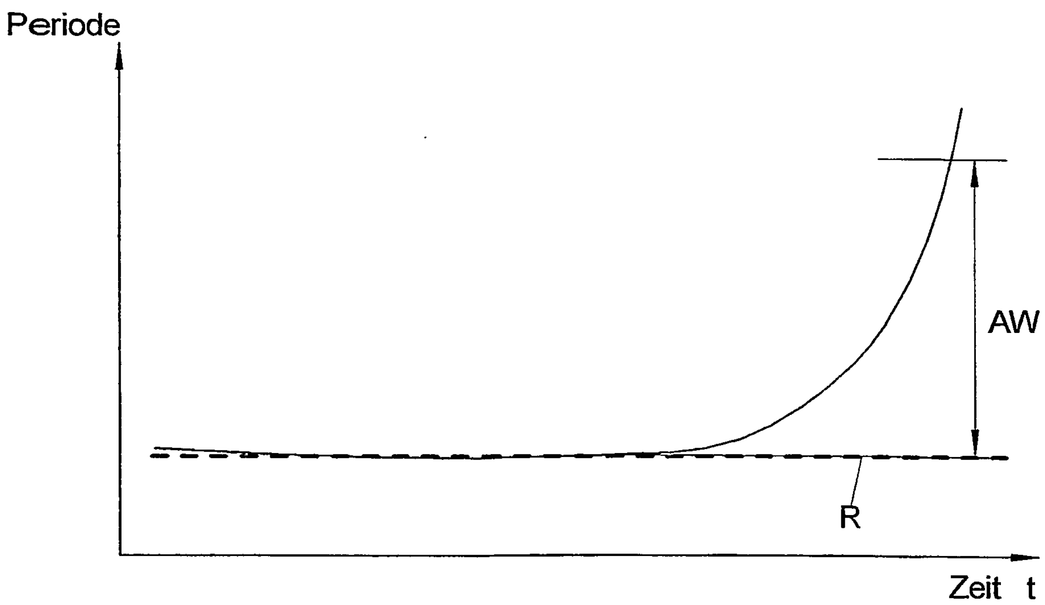

FIG 5

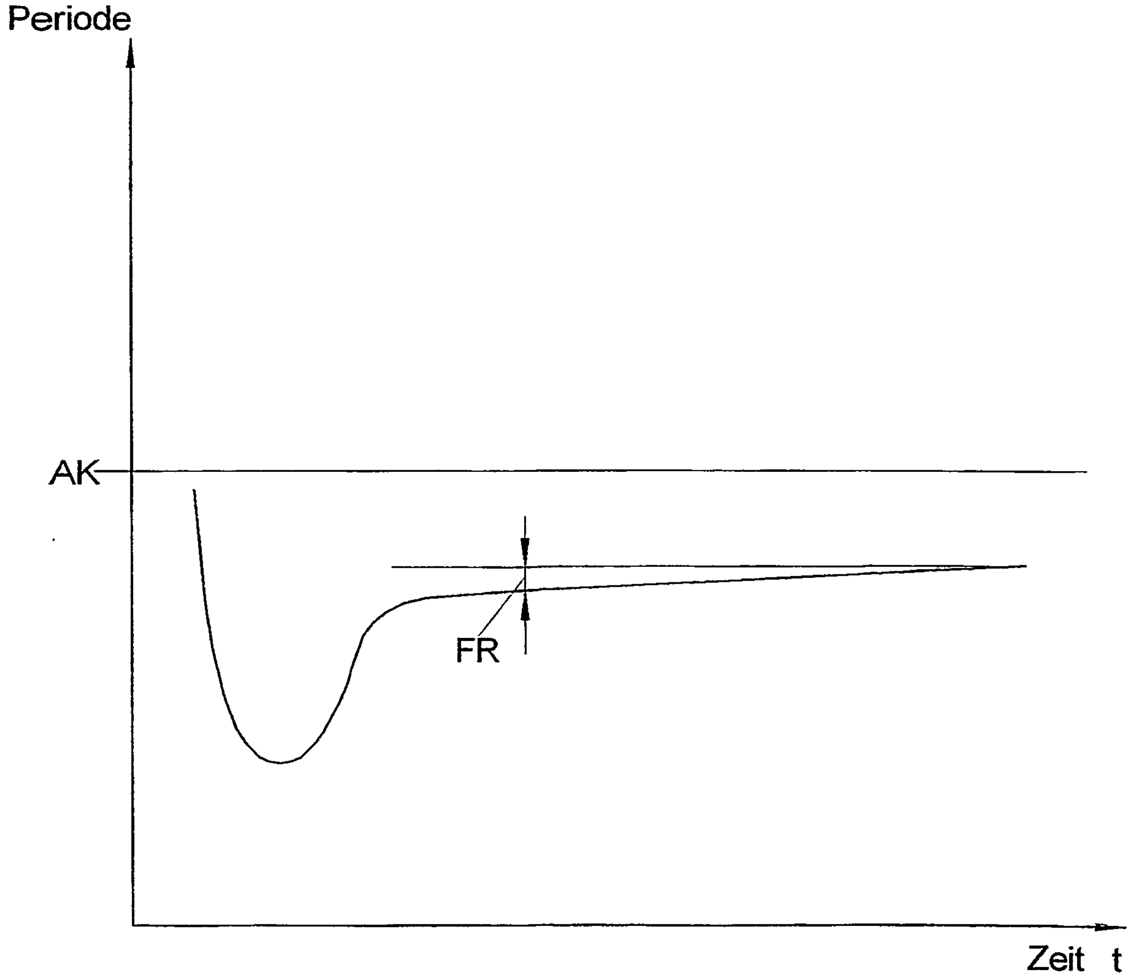

FIG 6

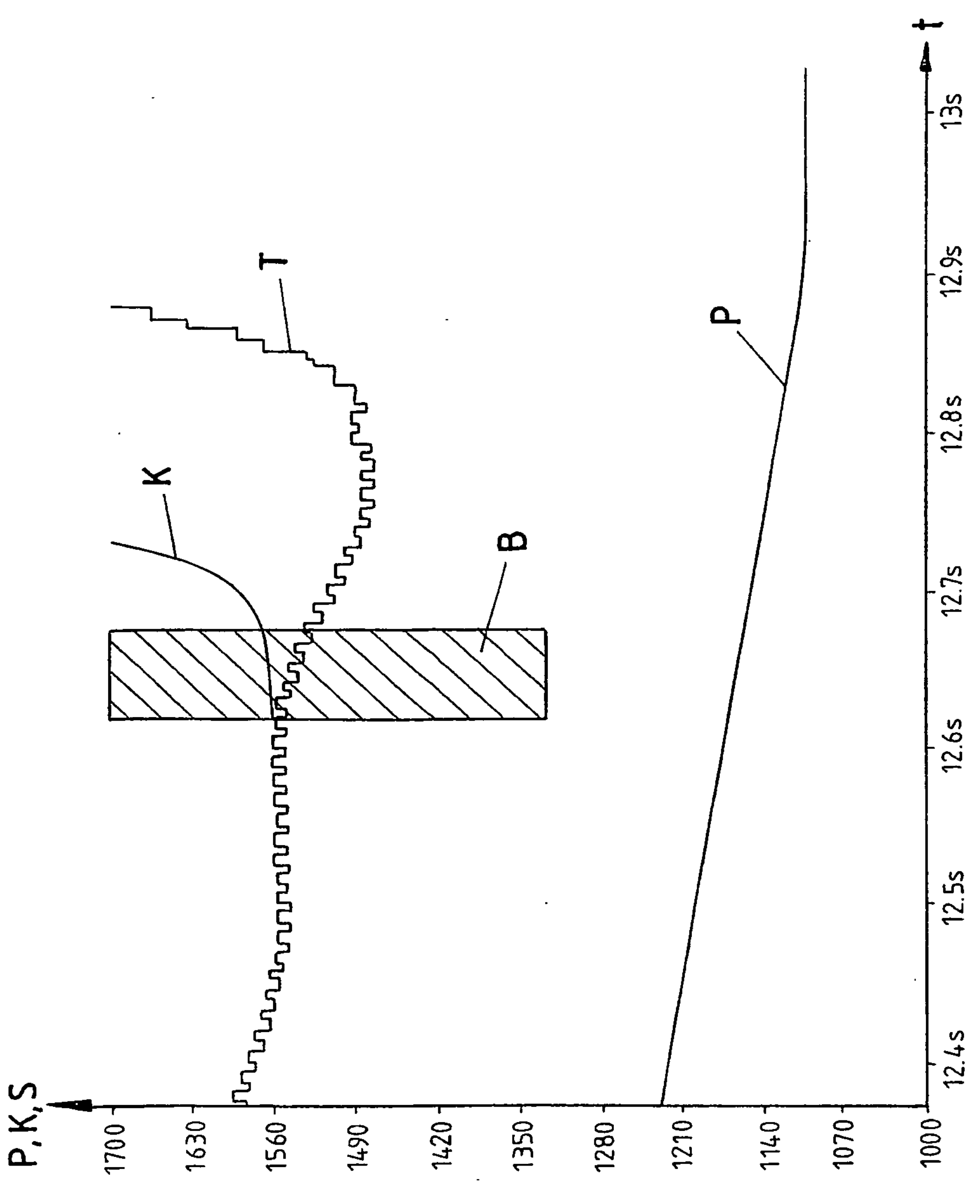
P,K,S
t
1700
1630
1560
1490
1420
1350
1280
1210
1140
1070
1000
12.4s
12.5s
12.6s
12.7s
12.8s
12.9s
13s
K
T
B
P

FIG 7

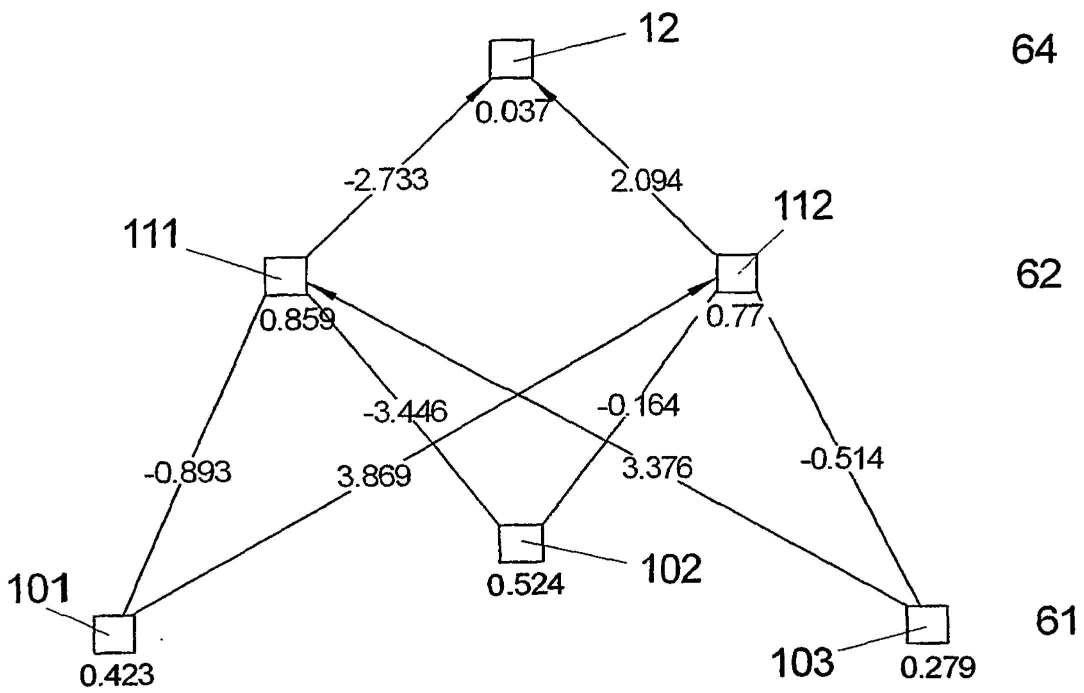
12
64
0.037
-2.733
2.094
112
111
62
0.859
0.77
-3.446
-0.164
-0.893
3.869
3.376
-0.514
102
0.524
101
61
103
0.423
0.279

FIG 8

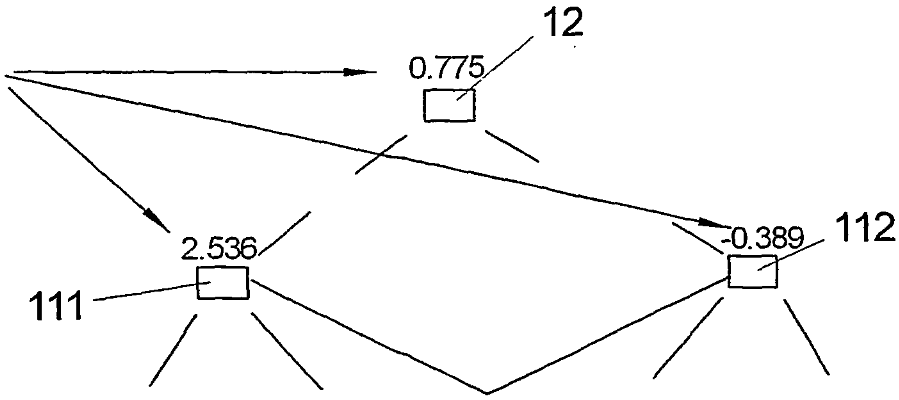
12
0.775
2.536
-0.389
112
111

FIG 9

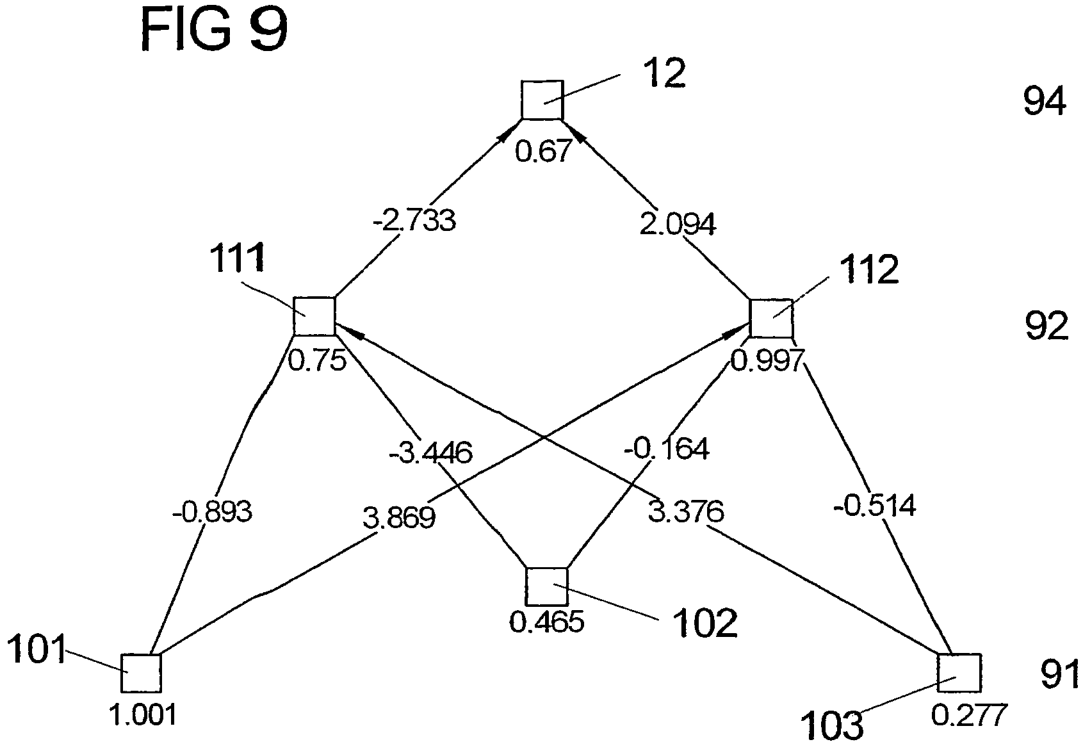
12
94
0.67
-2.733
2.094
111
112
92
0.75
0.997
-3.446
-0.164
-0.893
3.869
3.376
-0.514
0.465
102
101
1.001
91
103
0.277

FIG 10

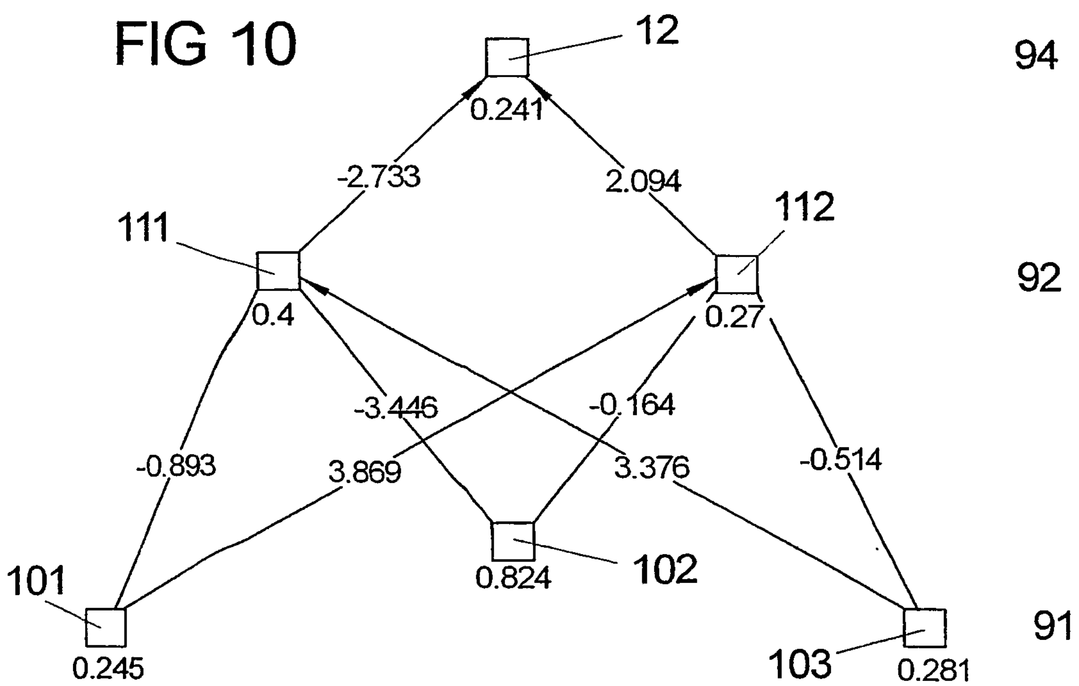
12
94
0.241
-2.733
2.094
111
112
92
0.4
0.27
-3.446
-0.164
-0.893
3.869
3.376
-0.514
0.824
102
101
0.245
91
103
0.281

FIG 11

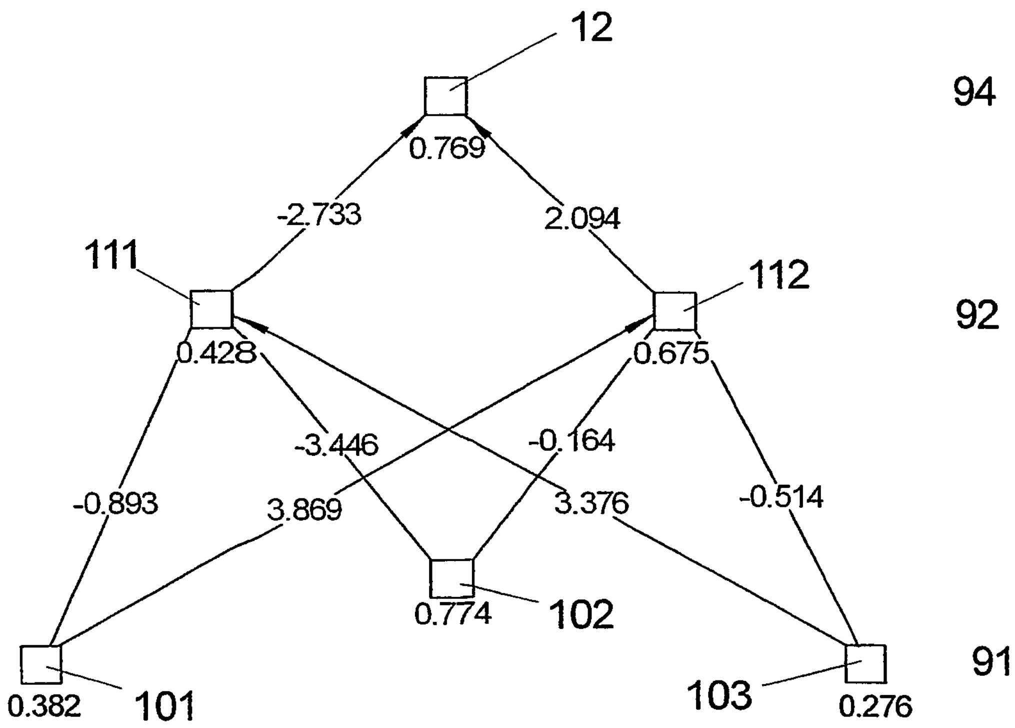
12
94
0.769
-2.733
2.094
111
112
92
0.428
0.675
-3.446
-0.164
-0.893
3.869
3.376
-0.514
0.774
102
0.382
101
103
0.276
91

FIG 12B

FIG 12A

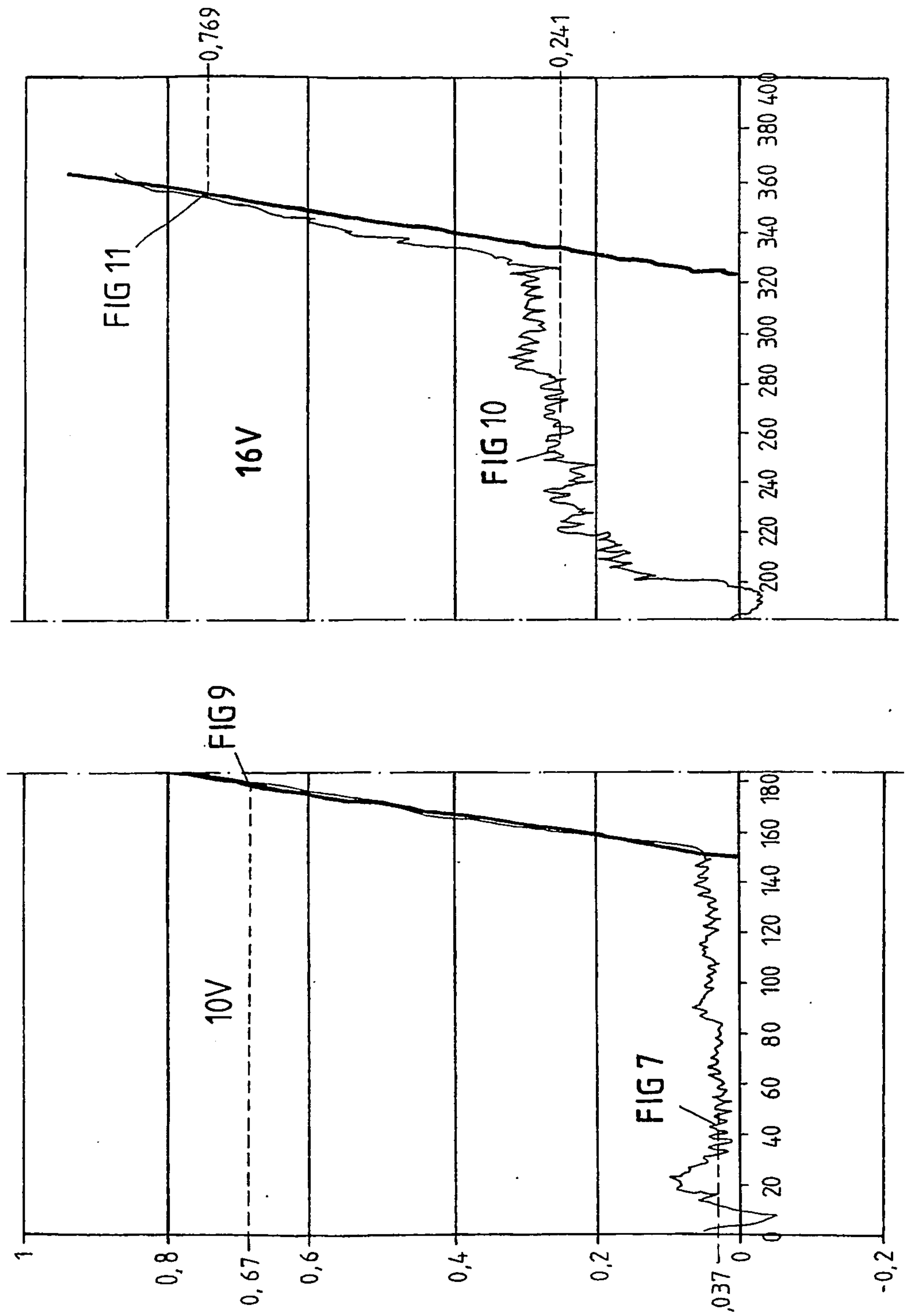

FIG 13

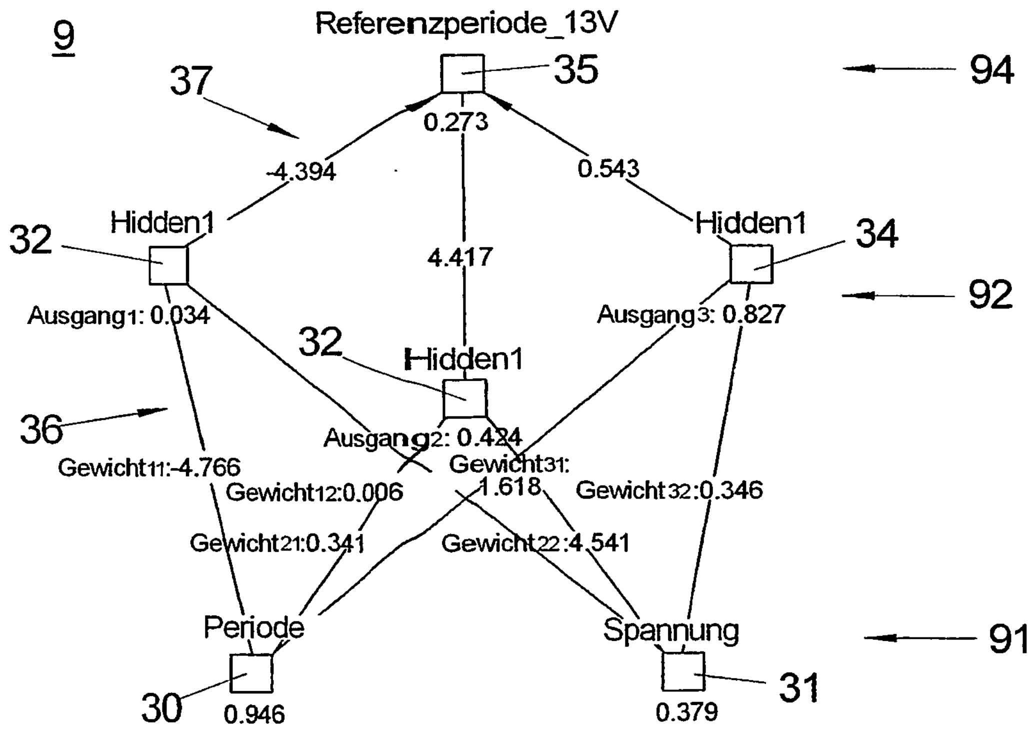
9
Referenzperiode_13V
35
94
37
0.273
-4.394
0.543
4.417
Hidden1
Hidden1
32
34
92
Ausgang1: 0.034
Ausgang3: 0.827
32
Hidden1
36
Ausgang2: 0.424
Gewicht11:-4.766
Gewicht31:
1.618
Gewicht12:0.006
Gewicht32:0.346
Gewicht21:0.341
Gewicht22:4.541
Periode
Spannung
91
30
0.946
0.379
31

FIG 14

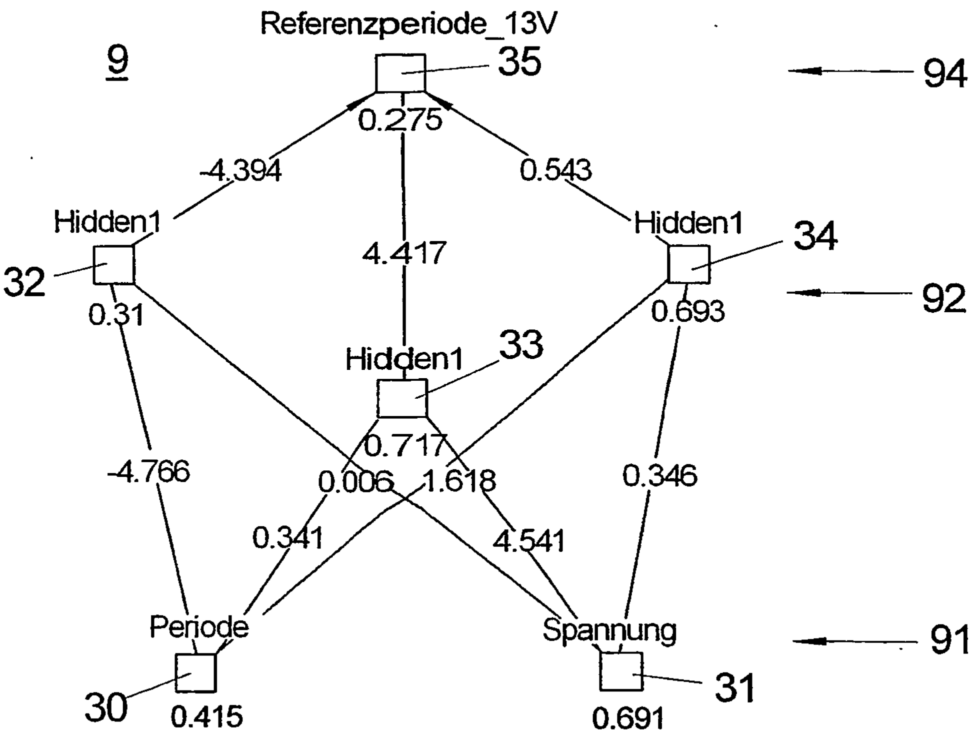
Referenzperiode_13V
9
35
94
0.275
-4.394
0.543
Hidden1
Hidden1
34
4.417
32
92
0.31
0.693
Hidden1
33
0.717
-4.766
0.006
1.618
0.346
0.341
4.541
Periode
Spannung
91
30
0.415
31
0.691

FIG 15

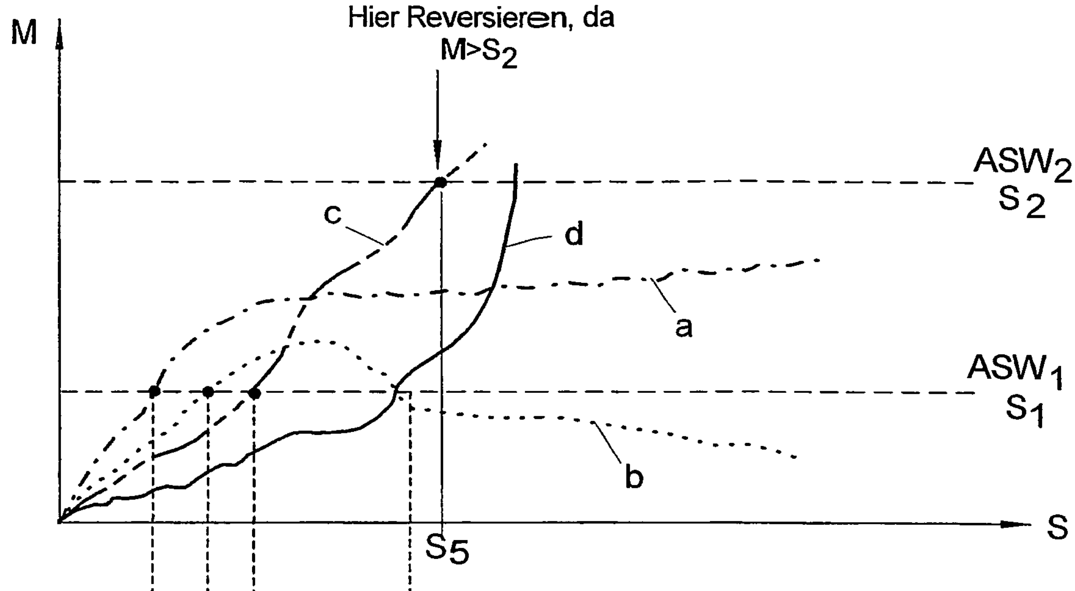
Hier Reversieren, da
M>S2
M
ASW2
S2
ASW1
S1
c
d
a
b
S
S5

FIG 16

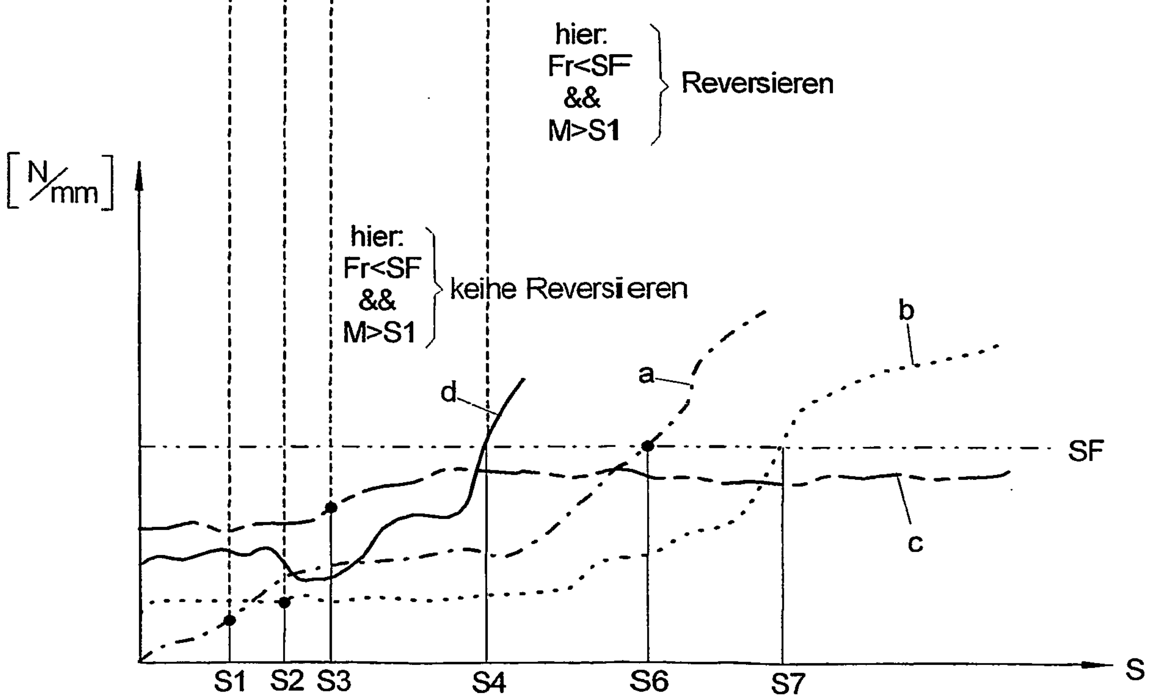
hier:
Fr<SF
&&
M>S1
Reversieren
[N/mm]
hier:
Fr<SF
&&
M>S1
keine Reversieren
a
b
d
SF
c
S
S1
S2
S3
S4
S6
S7

FIG 17

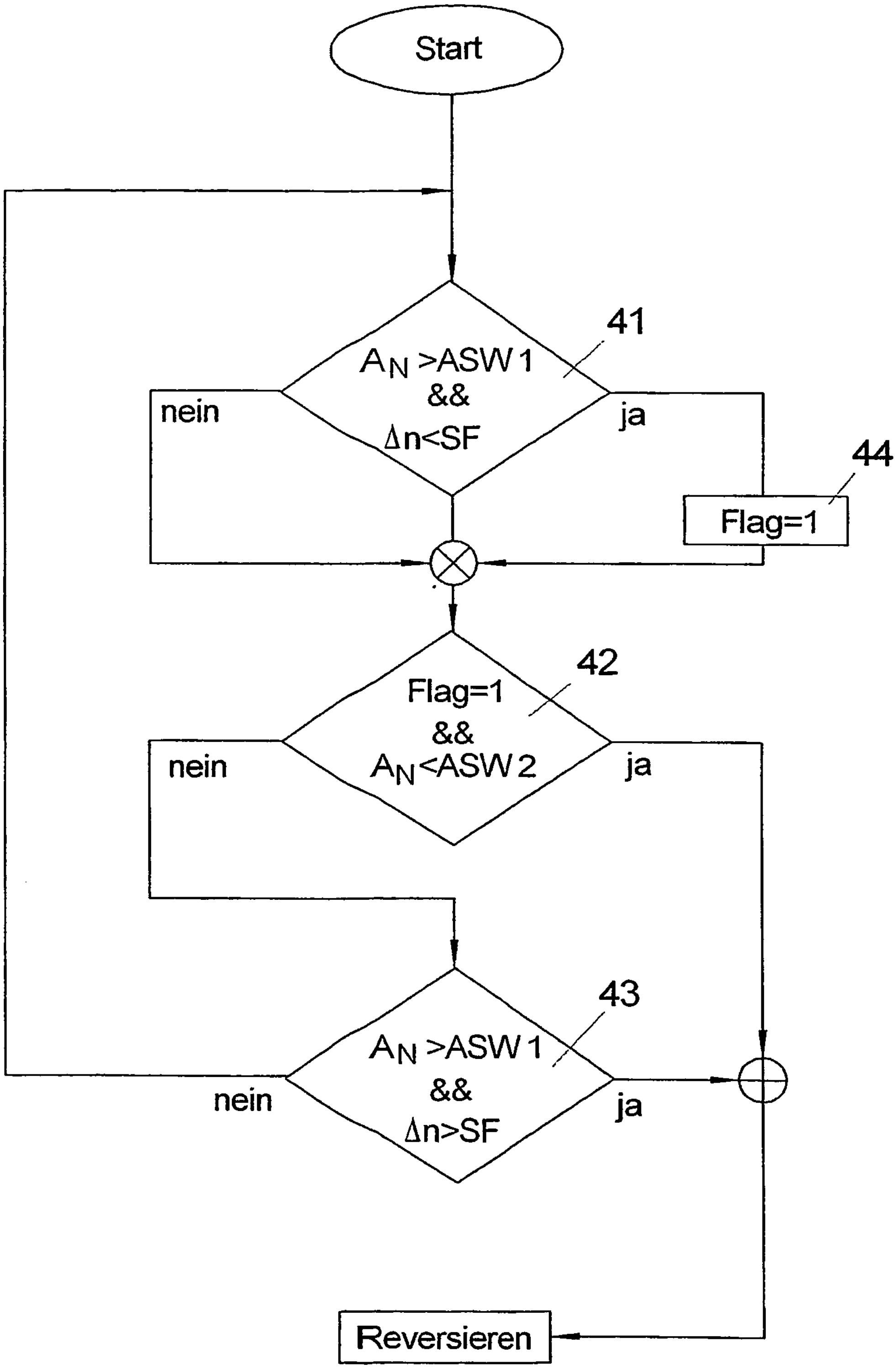
Start
41
$A_N$ >ASW 1
&&
Δn<SF
nein
ja
44
Flag=1
42
Flag=1
&&
$A_N$<ASW 2
nein
ja
43
$A_N$ >ASW 1
&&
Δn>SF
nein
ja
Reversieren

FIG 18A

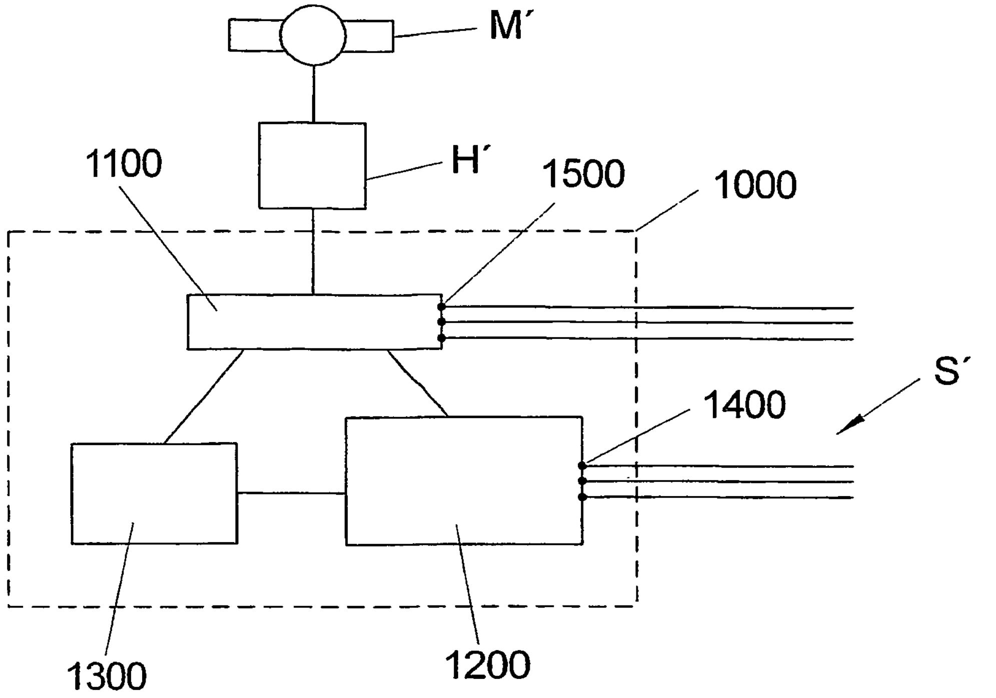


FIG 18B

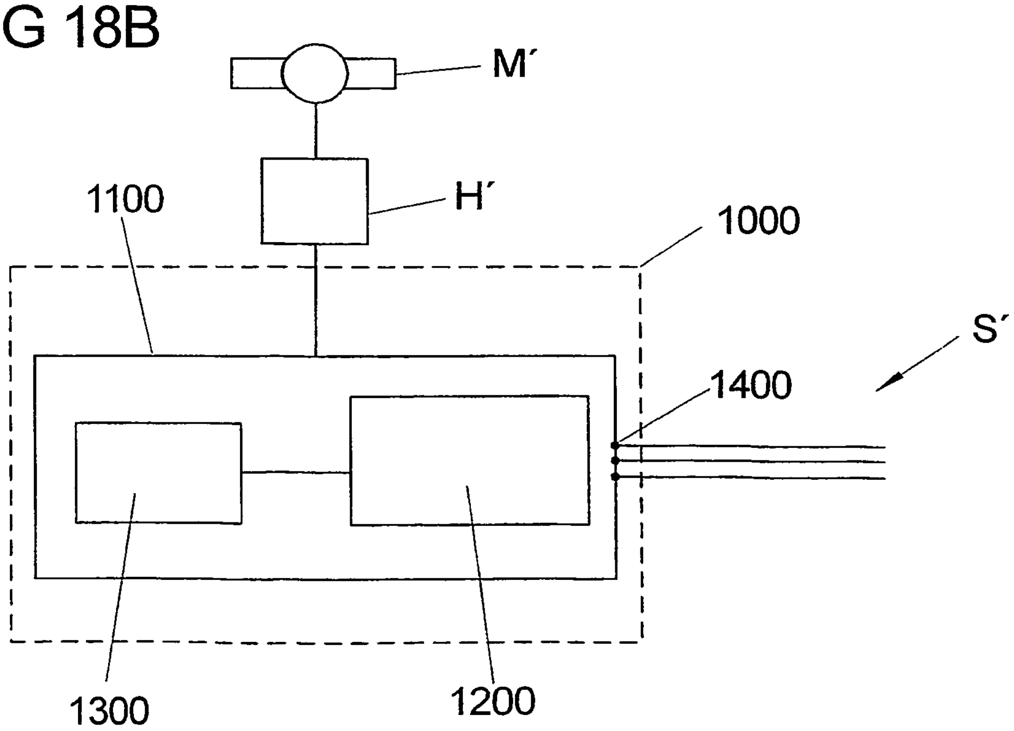

FIG 19

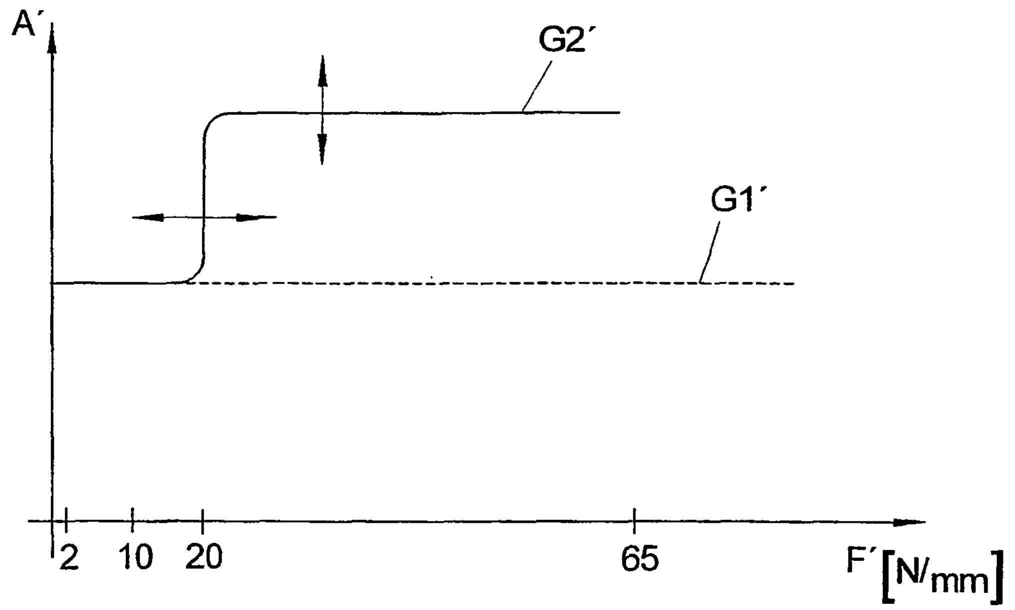

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19840164 A1
- DE 4020351 C2
- DE 10196629 T1
- WO 0227132 A1